# EUROPÄISCHE PATENTSCHRIFT

(11) **EP 1 797 470 B1**
(45) Veröffentlichungstag und Bekanntmachung des Hinweises auf die Patenterteilung: **29.12.2010**
(21) Anmeldenummer: 05787927.2
(22) Anmeldetag: 14.09.2005
(51) Int. Cl.: G02B 21/00, G02B 21/24

(54) **SICHERHEITSSYSTEM FÜR EIN LASERSTRAHLUNGSFÜHRENDES MIKROSKOP**
SECURITY SYSTEM FOR A MICROSCOPE WHICH EMITS LASER RADIATION
SYSTEME DE SECURITE DESTINE A UN MICROSCOPE LASER

(30) Priorität: 04.10.2004 DE 102004048229
(43) Veröffentlichungstag der Anmeldung: 20.06.2007
(73) Patentinhaber: Carl Zeiss MicroImaging GmbH, 07745 Jena (DE)
(72) Erfinder: NOLTE, Andreas, 37124 Rosdorf/ Mengershausen (DE); WAHL, Hubert, 07646 Stadtroda (DE); BECKER, Klaus, 37339 Breitenworbis (DE)
(74) Vertreter: Geyer, Fehners & Partner
(86) Internationale Anmeldenummer: PCT/EP2005/009900
(87) Internationale Veröffentlichungsnummer: WO 2006/037439

(56) Entgegenhaltungen:
- EP-A- 1 227 356
- DE-A1- 4 323 129
- DE-A1- 10 157 893

## Beschreibung

Die vorliegende Erfindung bezieht sich auf ein für die Nachrüstung vorgesehenes Sicherheitssystem für ein laserstrahlungsführende Mikroskop zum Schutz eines Benutzers der Mikroskops vor aus diesem ungewollt austretender Laserstrahlung.

In der Wissenschaft und Technik werden zunehmend laserstrahlungsführende Vorrichtungen verwendet, unter denen im Rahmen der vorliegenden Erfindung allgemein Vorrichtungen verstanden werden, in denen bzw. in deren Gehäuse wenigstens ein Abschnitt eines Strahlengangs für Laserstrahlung eines Lasers der Vorrichtung verläuft. Die laserstiahlungsführenden Vorrichtungen brauchen dabei keine speziellen optischen Elemente aufzuweisen, die die Laserstrahlung führen oder ablenken, jedoch ist dies häufig der Fall.

Ein Beispiel für solche Vorrichtungen sind Mikroskope, die über Laser verfügen. Im Bereich der konfokalen Mikroskopie werden beispielsweise Laserscanning-Mikroskope eingesetzt, im Bereich der Weitfeldmikroskopie TIRF-Systeme, d.h. Systeme für die sogenannte "Total Internat Reflection Fluorescence". Die dabei verwendeten Laser zeichnen sich durch immer größere Energiedichten aus, so daß die Laser teilweise in Laserklassen größer als 3 einzuordnen sind.

Da die Strahlung von Lasern der Laserklassen größer als 3 als stark augengefährdend gilt, müssen die Augen von Benutzern vor Laserstrahlung geschützt werden, die gegebenenfalls aus einer solchen laserstrahlurtgsführenden Vorrichtung ungewollt austritt.

Bei in sich geschlossenen Vorrichtungen ist dies nicht unbedingt ein Problem: Viele lasetstrahlungsführenden Vorrichtungen besitzen jedoch einen modularen Aufbau, der einen Austausch von vorgegebenen Modulen des optischen Systems durch einen Benutzer erlaubt. Für eine laserstrahlungsführende Vorrichtung vorgesehene Module im Sinne der Erfindung sind Elemente oder Einrichlungen, insbesondere eines optischen Systems der Vorrichtung, die von einem Benutzer je nach Ausbildung an die Vorrichtung bzw. eine Basiseinheit der Vorrichtung und/oder an weitere Module angeschlossen bzw. angebaut werden können. Bei Vorrichtungen im Sinne der Erfindung handelt es sich um moderne Mikroskope, die in der Regel modular aufgebaut sind. Ein Benutzer kann bei diesen Mikroskopen häufig entsprechend einem durch eine jeweilige Anwendung vorgegebenen Anforderungsprofil Module, die zur Verwendung mit den Mikroskopen ausgelegt sind, austauschen, an- oder abbauen.

Hierzu dienen sogenannte Ports, unter denen im Rahmen der vorliegende Erfindung allgemein Anschlüsse an einer laserstrahtungsführenden Vorrichtung und/oder einem Modul zum Anbau an die Vorrichtung verstanden werden, die dafür vorgesehen sind, daß ein Benutzer entsprechende Module an diese anschließen oder von diesen entfernen kann bzw. darf, und die optisch mit einem Abschnitt des Strahlengangs der Laserstrahlung in der Vorrichtung verbunden sind. Unter einer "optischen Verbindung" wird hierbei verstanden, daß Laserstrahlung direkt oder durch gewollt oder ungewollt in dem Abschnitt des Strahlengangs der Laserstrahlung in der Vorrichtung auftretende Körper abgelenkt in den Anschluß gelangen und aus diesem austreten kann. Neben diesen zur Verwendung durch einen Benutzer vorgesehenen Ports können noch andere Anschlüsse vorgesehen sein, die entweder werksseitig verschlossen sind oder an die nur Service-Personal Module anschließen kann oder darf. Solche Anschlüsse können beispielsweise Befestigungseinrichtungen aufweisen, an die Module nur mit Spezialwerkzeug anbaubar sind, oder an denen die Befestigungsvonichtungen versiegelt sind. Diese Anschlüsse werden im folgenden als nicht weiter zu erwähnende Teile der laserstrahlungsführenden Vorrichtung behandelt.

An den Ports können im Zusammenhang mit dem Anbau oder der Entfernung von Modulen Sicherheitsprobleme auftreten. Bei unachtsamer und fahrlässiger Handhabung der Module oder der Vorrichtung, insbesondere nach einem An- oder Abbau eines Moduls, kann unter ungünstigen Umständen möglicherweise Laserstrahlung aus einem der Ports austreten. Wenn beispielsweise der Benutzer nach Abbau eines Moduls vergißt den Port wieder zu verschließen, kann unter Umständen aus diesem beim späteren Betrieb Laserstrahlung austreten und einen Benutzer gefährden.

Zur Verineidung solcher Gefährdungen sind mehrere Gegenmaßnahmen bekannt. Die einfachste Maßnahme besteht darin, daß der Benutzer in der Bedienungsanleitung darauf hingewiesen wird, vor der Inbetriebhahme nach einem An- oder Abbau von Modulen die Ports zu kontrollieren.

Einen besseren Schutz bieten Hinweisschilder an den Ports, die den Beriutzer auf die Gefährdung hinweisen. Grobe Unachtsamkeit des Benutzers oder eine bewußte Mißachtung des Hinweises und eine daraus entstehende Gefährdung können so jedoch nicht ausgeschlossen werden.

Eine weitere Möglichkeit zur Reduktion der Gefährdung kann darin bestehen, die eigentlich zur Verwendung durch einen Benutzer vorgesehenen Ports zu blockieren, so daß ein Benutzer nicht eigenständig ein daran angeschlossenes Modul austauschen kann. Dieses Vorgehen hebt aber gerade die Vorteile einer modularen Bauweise wieder auf.

Als weitere Lösung ist eine Sicherheitsabschaltung bekannt. In EP 1 227 356 A1 ist ein Mikroskop beschrieben, das eine Erkennungseinrichtung besitzt, die erkennt, ob ein Element in einen Objektivhalter des Mikroskops eingesetzt ist. Die Erkennungseinrichtung ist mit einer Sperreinrichtung verbunden, mittels derer die von einer Beleuchtungsquelle abgegebene elektromagnetische Strahlung unterbrochen werden kann, wenn kein Element in dem Objektivhalter angeordnet ist. Die Erkennungseinrichtung kann insbesondere über einen Mikroschalter verfügert, der bei Einschrauben eines Objektivs in den Objektivhalter betätigt wird. Diese Lösung hat jedoch den Nachteil, daß sie nur eine Einzellösung darstellt, die den Objektivhalter betrifft.

Weiter erscheint eine Nachrüstung bestehender Mikroskope mit akzeptablen Kosten nicht ohne weiteres möglich.

Der vorliegenden Erfindung liegt daher die Aufgabe zugrunde, Mittel zum Schutz eines Benutzers eines laserstrahlungsführenden Mikroskops vor einem ungewollten Austritt von Laserstrahlung aus dieser Vorrichtung bereitzustellen, die einen besseren Schutz eines Benutzers der Vorrichtung vor einem ungewollten Austritt von Laserstrahlung aus dieser Vorrichtung bietet.

Die Aufgabe wird durch ein Sicherheitssystem gemäß Anspruch 1 gelöst. Das Mikroskop, das mit dem Sicherheitssystem versehen wird, umfaßt einen Laser mit einer Steuerung zur Ansteuerung des Lasers, Wenigstens zwei Ports zum Anschluß jeweils eines Moduls, wobei an den Ports laserstrahlung austreten kann.

Die einleitend schon näher definierte laserstrahlungsführende Vorrichtung verfügt über den Laser mit einer Steuerung für den Laser. Der Laser kann grundsätzlich beliebig gewählt sein. Die Laserstrahlung des Lasers wird in der laserstrahlungsführenden Vorrichtung entlang eines Laserstrahlengangs geführt, der sich gegebenenfalls auch in Zweige aufspalten kann, in denen die Laserstrahlung dann mehr oder weniger abgeschwächt isL Unter der Steuerung des Lasers wird eine Einrichtung verstanden, die die von dem Laser abgegebene Strahlungsleistung steuert, die also den Laser ein- und ausschalten oder gegebenenfalls dessen Ausgangsleistung verändern kann.

Die Erfindung ermöglicht einen Schutz eines Benutzers vor aus den eingangs bereits näher definierten Ports austretender Laserstrahlung dadurch, daß automatisch überprüft wird, ob sich diese in einem sicheren Zustand befinden, d.h. insbesondere, ob an diesen Ports Module angeschlossen sind, durch die ein ungewollter Austritt von augengefährdender Laserstrahlung zum Port unterbunden wird. Ist dies für einen der Ports nicht der Fall, wird die Abgabe von augengefährdender Laserstrahlung in die Ports unterbunden. Unter augengefährdender Laserstrahlung wird dabei Laserstrahlung mit einer Intensität verstanden, die eine Schädigung des menschlichen Auges hervorrufen kann. Insbesondere wird hierunter Laserstrahlung mit einer Intensität verstanden, die von Lasern der Laserklassen größer als 3 bei maximaler Intensität abgegeben werden kann.

Für die automatische Kontrolle der Ports der laserstrahlungsführenden Vorrichtung sind die Gegenstücksensoren und die Gegenstücke vorgesehen, die jeweils einem Port bzw. einem Port und einem daran angeschlossenen Modul zugeordnet sind. Vorzugsweise ist dabei ein Gegenstück an einem Modul und ein Gegenstücksensor wenigstens in der Nähe des entsprechenden Ports angeordnet, die Anordnung kann jedoch auch umgekehrt erfolgen.

Das Gegenstück verfügt über einen Erkennungsbereich, der von einem Gegenstücksensot erkannt wird, wenn das Gegenstücks und damit die Erkennungseinrichtung in einer vorgegebenen Orientierung von dem Gegenstücksensor um weniger als ein Maximalabstand beabstandet ist, indem der elektrische Zustand des Gegenstücksensors einen vorgegebenen Zustand erreicht. Der Maximalabstand richtet sich dabei nach der Art und Reichweite bzw. Empfindlichkeit des Gegenstücksensors für die Erfassung des Erkennungsbereichs. Das Gegenstück braucht die Annäherung an den Gegenstücksensor und die Beeinflussung des elektrischen Zustands des Gegenstücksensors nur in einer vorgegebenen Orientierung relativ zu dem Gegenstücksensor zu ermöglichen, vorzugsweise sind die Annäherung und Beeinflussung auch in mehreren Orientierungen möglich. Das Gegenstück ist vorzugsweise so an einem eingangs definierten Modul angebracht oder ausgebildet, so daß die Erkennungseinrichtung nur bei korrekter Anbringung des Moduls an dem Port von dem Gegenstücksensor erfaßbar ist.

Ein vorschriftsmäßiger und damit sicherer Abschluß eines Ports gegen den Austritt von Laserstrahlung aus der Vorrichtung kann daher dadurch erkannt werden, daß der Gegenstücksensor den Erkennungsbereich des entsprechenden Gegenstücks erfaßt und einen entsprechenden elektrischen Zustand einnimmt. Der vorgegebene elektrische Zustand kann beispielsweise durch einen Wert eines entsprechenden Parameters oder auch einen ganzen Bereich von Werten gegeben sein.

Zur Erfassung der elektrischen Zustände und zur Auswertung der elektrischen Zustände der Gegenstücksensoren dient die Auswerteeinrichtung, die aus einer elektrischen, gegebenenfalls hochintegrierten nicht programmierbaren Schaltung bestehen oder vorzugsweise einen programmierbaren, mit entsprechenden Schnittstellen verbundenen Mikroprozessor aufweisen kann.

Erfaßt mindestens einer der Gegenstücksensoren kein Gegenstück, d.h. wird ein korrekter Anschluß Ober den entsprechenden elektrischen Zustand wenigstens eines der Gegenstücksensoren für einen Port nicht erkannt, wird die Abgabe von augengefährdender Laserstrahlung aus den Ports verhindert. Dazu genügt es, daß die Intensität der im Bereich der Ports auftretenden Laserstrahlung, beispielsweise durch Absorption, Strahlaufweitung oder teilweise Ablenkung, soweit herabgesetzt wird, daß eine Augengefährdung nicht mehr gegeben ist, vorzugsweise wird die Laserstrahlung vollkommen blockiert. Hierzu kann die Steuerung des Lasers von der Auswerteeinrichtung angesteuert werden oder es kann die gegebenenfalls in der Vorrichtung vorhandene Laserstrahlungs-Sperreinrichtung betätigt werden, die sich irgendwo im Strahlengang zwischen dem Laser und den Ports befinden kann und mittels derer eine Abgabe von augengefährdender Laserstrahlung in die Ports der Vorrichtung verhindert werden kann. Die Sperreinrichtung braucht die Laserstrahlung bei Betätigung nur hinreichend stark abschwächen zu können, vorzugsweise blockiert sie diese dann jedoch völlig. Der Einfachheit halber wird im Rahmen der Erfindung von einem sperrenden Zustand der Sperreinrichtung gesprochen, wenn diese die Laserstrahlung wenigstens soweit abschwächt, daß eine Augengefährdung nicht mehr vorliegt. Vorzugsweise ist daher die Auswerteeinrichtung so ausgebildet, daß als Steuersignal ein Signal abgegeben wird, das den Laser abschaltet oder die Sperrvorrichtung in den die Laserstrahlung sperrenden Zustand versetzt, wenn wenigstens einer der Gegenstücksensoren kein Gegenstück erfaßt. Auf diese Weise kann sichergestellt werden, daß bei Auftreten nur einer Gefährdungsstelle bereits die Abgabe von augengefährdender Laserstrahlung in die Ports der laserstrahlungsführende Vorrichtung verhindert werden kann.

Darüber hinaus ermöglicht die Erfindung einen umfassenden Schutz eines Benutzers einer laserstrahlungsführenden Einrichtung, indem zumindest zwei relevant erscheinende Ports und nicht nur eine singuläre Stelle an der Vorrichtung überwacht wird. Dabei kann auch ausgenutzt werden, daß bei modularen Vorrichtungen häufig die Ports gleich dimensioniert sind, so daß die Kontrolle verschiedener Ports durch Bereitstellung der gleichen Mittel zur Überwachung und damit einfach möglich ist.

Laserstrahlungsführende Vorrichtungen, insbesondere Mikroskope sind häufig sehr langlebig, so daß eine Möglichkeit zur Nachrüstung wünschenswert ist.

Das erfindungsgemäß im Sicherheitssystem vorgesehene Anbauteil umfaßt eine Befestigungseinrichtung zur Befestigung des Anbauteils an dem laserstrahlungsführenden Mikroskop und mindestens einen Gegenstücksensor, dessen elektrischer Zustand davon abhängt, ob ein vorgegebenes Gegenstück in wenigstens einer vorgegebenen Orientierung zu dem Anbauteil um weniger als ein Maximalabstand von dem Anbauteil beabstandet ist. Der im Zusammenhang mit dem Anbauteil verwendete Maximalabstand kann sich von dem im Zusammenhang mit dem Gegenstücksensor verwendeten Maximalabstand unterscheiden, doch hängen beide bei einem Anbauteil voneinander ab.

Weiter ist im Sicherheitssystem erfindungsgemäß ein Gegenstück vohanden das wenigstens eine Erkennungseinrichtung aufweist, die den elektrischen Zustand des Gegenstücksensors des Anbauteils beeinflußt, wenn das Gegenstück in der vorgegebenen Orientierung zu dem Anbauteil um weniger als der Maximalabstand von dem Anbauteil beabstandet ist. Die Gegenstücks sind als Gegenstücke für die Anbauteile ausgebildet, so daß insbesondere deren Erkennungseinrichtungen und die Gegenstücksensoren in ihren Ausbildungen und Lagen relativ zu dem Gegenstück bzw. dem Anbauteil aufeinander abgestimmt sind. Die Orientierung und der Maximalabstand für eine Beeinflussung des elektrischen Zustands des Gegenstücksensors sind jeweils durch die Ausbildung des Gegenstücksensors und dessen Anordnung in dem Anbauteil einerseits und die Ausbildung der Erkennungseinrichtung andererseits bestimmt. Das Anbauteil wird so an der Vorrichtung oder einern Modul angebracht, daß die Erfassung eines Gegenstücks dahingehend interpretiert werden kann, daß ein entsprechendes Modul an den Port angeschlossen ist.

Die Anbauteile können an die laserstrahlungsführenden Vorrichtung oder ein Modul für dieselbe angebaut werden, wodurch eine laserstrahlungsführende Vorrichtung geschaffen werden kann, bei der wenigstens einer der Gegenstücksensoren ein Gegenstücksensor eines an einem der Ports angeordneten erfindungsgemäßen Anbauteils ist. Damit wird die Möglichkeit einer Nachrüstung geschaffen, so daß auch ältere Geräte mit Gegenstücksensoren, Gegenstücken und einer Auswerteeinrichtung abgesichert werden können. Darüber hinaus kann die Verwendung von erfindungsgemäßen Anbauteilen auch bei der Fertigung von neuen laserstrahlungsführenden Vorrichtungen einfacher sein, als die direkte Anbringung von Gegenstücksensoren, da bereits bestehende Konstruktionen beispielsweise von Basiseinheiten wie Mikroskopstativen nicht abgeändert zu werden brauchen, sondern einfach ergänzt werden können. Eine besonders einfache Herstellung einer erfindungsgemäßen laserstrahlungsführenden Vorrichtung wird ermdglicht, wenn alle Gegenstücksensoren Gegenstücksensoren von jeweils an den Ports der Vorrichtung angeordneten erfindungsgemäßen Anbauteilen sind.

Somit sieht die Erfindung ein für ein laserstrahlungsführendes ein Mikroskop vorgesehenes Sicherheitssystem vor, das umfaßt wenigstens zwei erfindungsgemäße Anbauteile, und wenigstens eine mit den wenigstens zwei Anbauteilen über eine Signalverbindung verbundene Auswerteeinrichtung, die die elektrischen Zustände der Gegenstücksensoren erfaßt und in Abhängigkeit von den erfaßten Zuständen ein Steuersignal an eine Steuerung eines Lasers für die Vorrichtung oder eine Laserstrahlungs-Sperrvorrichtung abgibt.

Durch Ausstattung einer bereits bestehenden laserstrahlungsführenden Vorrichtung mit einem erfindungsgemäßen Sicherheitssystem kann einfach ein sehr guter Schutz von Benutzern der Vorrichtung erreicht werden, ohne hohen Aufwand bzw. hohe Kosten zu verursachen.

Vorzugsweise ist das Sicherheitssystem und insbesondere die Auswerteeinrichtung so ausgebildet, daß als Steuersignal ein Signal abgegeben wird, das den Laser abschaltet oder die Sperrvorrichtung in einen die Laserstrahtung sperrenden Zustand versetzt, wenn wenigstens einer der Gegenstücksensoren kein Gegenstück erfaßt. Auf diese Weise kann sichergestellt werden, daß bei Auftreten nur einer Gefährdungsstelle bereits die Abgabe von augengefährdender Laserstrahlung in die laserstrahlungsführende Vorrichtung verhindert werden kann.

Grundsätzlich genügt es, nur die Ports mit dem größten Gefährdungspotential abzusichern. Ein besonders guter Schutz von Benutzern vor Laserstrahlung wird jedoch erhalten, wenn bei der erfindungsgemäßen laserstrahlungsführenden Vorrichtung für alle Ports wenigstens ein Gegenstücksensor vorgesehen ist, der mit der Auswerteeinrichtung über eine Signalverbindung verbunden ist. Der Gegenstücksensor ist an einem Anbauteil an einem der zur Verwendung durch Benutzer vorgesehenen Port gehalten.

Bei Erkennung eines Ports, bei dem kein Gegenstück von einem dort vorhandenen Gegenstücksensor erfaßt wurde, kann der Laser ganz abgeschaltet oder wenigstens dessen Ausgangsleistung reduziert werden. Alternativ oder zusätzlich ist es bevorzugt, daß die Sperreinrichtung den Ports vorgeordneten Shutter aufweist, der von der Auswerteeinrichtung des Sicherheitssystems angesteuert wird, wobei der Shutter geschlossen wird, wenn einer der mit der Auswerteeinrichtung verbundenen Gegenstücksensoren kein Gegenstück erfaßt. Ein solcher im Strahlengang der Laserstrahlung zwischen dem Laser und den Ports angeordneter Shutter kann insbesondere bei einem Mikroskop in dessen Stativ unmittelbar nach einem Anschluß oder Port zum Anschluß eines Lasermoduls angeordnet sein, so daß beliebige Lasermodule an das Mikroskop angeschlossen werden können.

Um einen möglichst guten Schutz zu erreichen, sind die Anbauteile und die Gegenstücke in Kombination so gewählt, daß nicht ohne weiteres ein zufällig in den Bereich des Anbauteils gelangender Gegenstand als Gegenstück erkannt wird.

Als Gegenstücksensoren können prinzipiell beliebige Sensoren dienen, mittels derer das Vorhandensein von Gegenständen in deren Nähe erfaßbar ist. Beispielsweise können optische, kapazitive oder Ultraschall-Sensoren verwendet werden. Eine besonders hohe Sicherheit gegen Störungen beispielsweise durch Umgebungslicht wird erhalten, wenn bei dem erfindungsgemäßen Anbauteil als Gegenstücksensor ein Taster vorgesehen ist, der durch wenigstens einen Abschnitt des Gegenstücks betätigbar ist. Die Auswerteeinrichtung kann dann als elektrischen Zustand des Gegenstücksensors dessen Leitfähigkeit detektieren. Als Erkennungseinrichtung des Gegenstücks kann ein entsprechender Abschnitt seiner Oberfläche dienen. Vorzugsweise weist das Gegenstück einen flächigen Oberflächenabschnitt auf, der bei Drehung des Gegenstücks relativ zu dem Anbauteil in ansonsten gleicher Relativlage zu dem Anbauteil auf einem Betätigungselement des Tasters aufliegt und diesen so in mehreren Orientierungen betätigt.

Um eine nur zufällige Betätigung des Tasters vermeiden zu können, ist bei dem erfindungsgemäßen Anbauteil vorzugsweise ein freies Ende eines Betätigungselements des Tasters in dem Anbauteil versenkt. Die Erkennungseinrichtung des entsprechenden Gegenstücks weist dann vorzugsweise mindestens einen Vorsprung auf, der den Taster betätigt, wenn das Gegenstück in der vorgegebenen Orientierung zu dem Anbauteil um weniger als der Maximalabstand von dem Anbauteil beabstandet ist.

Eine andere bevorzugte Ausführungsform des Anbauteils weist als Gegenstücksensor zwei elektrische Kontakte auf, die mittels eines vorgegebenen elektrisch leitenden Bereichs des Gegenstücks elektrisch miteinander verbindbar sind. Die Erkennungseinrichtung des entsprechenden (Gegenstücks weist dann vorzugsweise mindestens einen elektrisch leitenden Vorsprung auf, der die elektrischen Kontakte kurzschließt, wenn das Gegenstück in der vorgegebenen Orientierung zu dem Anbauteil um weniger als der Maximalabstand von dem Anbauteil beabstandet ist. Ein solcher Gegenstücksensor ist besonders einfach aufgebaut und kann daher über eine besonders lange Lebensdauer verfügen.

Bei den Gegenstücken der beiden zuletzt beschriebenen Ausführungsformen kann der Vorsprung, der die Erkennungseinrichtung darstellt, insbesondere durch einen Stift gebildet werden. Dieser Stift kann in eine entsprechende Bohrung eines Grundkörpers des Gegenstücks eingelassen sein. Vorzugsweise besteht er aus Metall.

Bei einer weiteren Ausführungsform des Anbauteils ist als Gegenstücksensor ein magnetfeldempfindlicher Sensor vorgesehen. Obwohl dabei beliebige magnetfeldempfindliche Sensoren, beispielsweise magnetoresistive oder GMR-("giant magnetic resistance") Sensoren verwendet werden können, ist der Gegenstücksensor vorzugsweise ein Hall-Sensor. Bei Hall-Sensoren wird der verwendete elektrische Zustand durch den Wert der Hall-Spannüng wiedergegeben, die bei Auftreten eines magnetischen Feldes in dem Hall-Sensor entsteht. Zur Verwendung mit magnetfeldempfindlichen Gegenstücksensoren umfaßt die Erkennungseinrichtung eines entsprechenden erfindungsmäßen Gegenstücks vorzugsweise einen Magneten.

Bei einer anderen bevorzugten Ausführungsform des Anbauteils ist als Gegenstücksensor eine Sende-/Empfangseinrichtung mit Antenne zur Erkennung wenigstens eines vorgegebenen Transponders vorgesehen. Das Gegenstück verfügt darin vorzugsweise über eine Transponder, der insbesondere zum Betrieb mit der Sende-/Empfangseinrichtung des erfindungsgemäßen Anbauteils ausgebildet ist. Durch geeignete Anordnung der Antenne an dem Anbauteil und des Transponders an dem Gegenstück kann erreicht werden, daß der Transponder nur erkannt wird, wenn sich das Gegenstück in der vorschriftsmäßigen Lage zu der Antenne und damit dem Anbauteil befindet. Diese Ausführungsform bietet den weiteren Vorteil, daß der Typ des Gegenstücks automatisch durch die Sende-/Empfangseinrichtung identifiziert werden kann, wenn der Transponder über eine entsprechende abfragbare Kennung verfügt. Die Identifizierungsdaten können an die Auswerteeinrichtung oder eine andere Steuereinrichtung der Iaserstrahlungsführenden Einrichtung übermittelt werden. Insbesondere kann RFID-Technik verwendet werden, wobei der Transponder ein RFID-Bauelement oder eine sogenanntes "RFID-Tag" ist, und die Sende-/Empfangseinrichtung mit Antenne ein entsprechendes Lesegerät bildet.

Bei einigen Modulen kann es sich als notwendig erweisen, daß diese beim Einbau in verschiedene Stellungen gedreht werden müssen. So kann es notwendig sein, daß das Modul bei der Montage in eine geeignete Stellung gedreht wird. Daher weist der Magnet des Gegenstücks vorzugsweise Ringform auf. Unabhängig von seiner Winkelstellung kann der als Erkennungseinrichtung fungierende Magnet dann von einem entsprechenden Gegenstücksensor erfaßt werden.

Grundsätzlich braucht ein Anbauteil nur einen Gegenstücksensor aufzuweisen. Vorzugsweise sind jedoch wenigstens zwei Gegenstücksensoren vorgesehen. Diese können gleich oder verschieden ausgebildet sein. Die Gegenstücksensoren können gemäß einer ersten Alternative beide gleichzeitig mit der Auswerteeinrichtung verbunden sein, die dann so ausgebildet ist, daß ein Gegenstück nur als erfaßt gilt, wenn beide Gegenstücksensoren gleichzeitig entsprechende Teile der Erkennungseinrichtung desselben Gegenstücks erfassen.

Das heißt, daß die Auswerteeinrichtung so ausgebildet ist, daß diese nur bei Detektion eines vorgegebenen Musters von elektrischen Zuständen der Gegenstücksensoren das Vorhandensein eines Gegenstücks erkennt. Bei Verwendung von voneinander verschiedenen Gegenstücksensoren sind entsprechende Gegenstücke erforderlich, deren Erkennungseinrichtungen den Gegenstücksensoren entsprechende Teile umfassen. Sie sind daher nicht einfach durch andere Gegenstände zu ersetzen; so daß eine Manipulationsgefahr stark herabgesetzt wird.

Gemäß einer zweite Alternative können die Gegenstücksensoren auch an verschiedenen Stellen des Anbauteils angeordnet sein und die Auswerteeinrichtung ist dann vorzugsweise so ausgebildet, daß sie das Vorhandensein eines Gegenstücks erkennt, wenn wenigstens einer der Gegenstücksensoren einen entsprechenden elektrischen Zustand einnimmt. Dies ermöglicht es, ein Gegenstück in verschiedenen Lagen relativ zu dem Anbauteil anzubringen, wobei es immer noch durch wenigstens einen der Gegenstücksensoren erfaßbar ist.

Zur Erfassung des elektrischen Zustands der Gegenstücksensoren sind diese mit der Auswerteeinrichtung über Signalverbindungen verbunden. Eine besonders einfache und störsichere Verbindung wird erhalten, wenn das Anbauteil mit dem Gegenstücksensor verbundene Anschlüsse für Signalleitungen zu einer Auswerteeinrichtung aufweist. Bei dem erfindungsgemäßen Sicherheitssystem sind dann das Anbauteil und die Auswerteeinrichtung mittels einer Leitung verbunden.

Bei Verwendung mehrerer Anbauteile kann die entsprechende Zahl von Leitungen die Arbeit an der laserstrahlungsführenden Vorrichtung, insbesondere einem Mikroskop, behindern. Darüber hinaus kann die Verlegung und Befestigung der Leitungen erheblichen Aufwand erfordern. Bei dem erfindungsgemäßen Sicherheitssystem weisen daher vorzugsweise wenigstens ein Anbauteil eine mit dem Gegenstücksensor verbundene Funksendeeinrichtung und die Auswerteeinrichtung eine entsprechende Funkempfangseinrichtung auf, so daß die Signalverbindung zwischen dem Anbauteil und der Auswerteeinrichtung funkgestützt ist. Insbesondere ist bei dem Anbauteil dazu vorzugsweise der Gegenstücksensor mit einer Funksendeeinrichtung verbunden, über die ein Signal abgebbar ist, das den elektrischen Zustand des Gegenstücksensors wiedergibt. Dabei können im Prinzip beliebige Funkfrequenzen verwendet werden. Vorzugsweise sind die Sende- und die Empfangseinrichtung bzw. die Funkschnittstelle zur Verwendung von für den allgemeinen Gebrauch freigegebenen Frequenzbändern ausgelegt. Besonders bevorzugt genügen die Sende- und Empfangseinrichtungen bzw. die Funkschnittstelle dem "bluetooth"-Standard.

Im Prinzip genügt es dabei, daß eine Datenübertragung nur von dem Gegenstücksensor zu der Auswerteeinrichtung erfolgt. Vorzugsweise verfügen jedoch sowohl das Anbauteil als auch die Auswerteeinrichtung über eine Sende- und Empfangseinrichtung, so daß eine bidirektionale Verbindung zwischen diesen aufbaubar ist.

Die Anbauteile verfügen zur Befestigung an der laserstrahlungsführenden Vorrichtung oder einem Port eines Moduls über die Befestigungseinrichtung. Diese kann grundsätzlich beliebig ausgebildet sein. Die Wahl der Befestigungseinrichtung kann sich unter anderem nach der Art und Ausbildung des abzusichernden Ports, der Art und Ausbildung der Befestigung eines Moduls an dem Port und dem an dem jeweiligen Port zur Verfügung stehenden Raum richten. Vorzugsweise ist die Befestigungseinrichtung so ausgebildet, daß ein Benutzer ein an die Vor richtung angebautes Modul nicht mehr zerstörungsfrei mit üblichem Werkzeug lösen kann.

Bei einer Ausführungsform des Anbauteils umfaßt die Befestigungseinrichtung eine Fläche zur stoffschlüssigen Verbindung mit einer vorgegebenen Fläche der laserstrahlungsführenden Vorrichtung oder eines Moduls für diese, insbesondere mit einem Port. Die Fläche des Anbauteils ist dabei vorzugsweise so ausgebindet, daß diese in der Anbaulage auch formschlüssig mit der entsprechenden Fläche der laserstrahlungsführenden Vorrichtung ist. Das Anbauteil kann daher einfach an die laserstrahlungsführende vonichtung angeklebt oder in sonstiger Weise stoflschlüssig mit dieser verbunden werden, was eine Nachrüstung erleichtern kann. Die Form und Größe der Fläche kann sich insbesondere nach dem Anbauort an der laserstrahlungsführenden Vorrichtung richten. Diese Ausführungsform eignet sich insbesondere für Ports, die keine aus einer Oberfläche der laserstrahlungsführenden Vorrichtung hervorstehenden Anschlußelemente wie beispielsweise rohrförmige Stutzen besitzen.

Alternativ oder zusätzlich zu der stoffschlüssigen Befestigung kann bei dem Anbauteil die Befestigungseinrichtung wenigstens ein Loch für eine Schraube oder ein Niet umfassen. Eine Schraub- oder Nietverbindung kann nicht nur große Kräfte aufnehmen, sondern erlaubt, insbesondere bei Verwendung von wenigstens zwei Schrauben bzw. Nieten, auch eine genaue Ausrichtung des Anbauteils an der laserstrahlungsführenden Vorrichtung. Das Gewinde zur Aufnahme der Schraube kann in der laserstrahlungsführenden Vorrichtung vorgesehen sein. Unter einer Schraube wird hierbei auch ein Gewindestift verstanden, der an der laserstrahlungsführenden Vorrichtung fest gehalten ist.

Ein mit einer Schraubverbindung an der laserstrahlungsführenden Vorrichtung gehaltenes Anbauteil kann bei Verwendung üblicher Schrauben oder Muttern prinzipiell einfach durch einen Benutzer gelöst werden, so daß das Anbauteil von der laserstrahlungsführenden Vorrichtung entfernt werden kann. Um eine solche Manipulation zumindest wesentlich zu erschweren, umfaßt bei dem erfindungsgemäßen Anbauteil vorzugsweise die Befestigungseinrichtung wenigstens eine Schraube und/oder Mutter mit einer codierten Werkzeugaufnahme. Unter einer Werkzeugaufnahme wird dabei ein Abschnitt der Schraube oder Mutter verstanden, an den das zum Herstellen oder Lösen der Schraubverbindung verwendete Werkzeug angesetzt oder in den das zum Herstellen oder Lösen der Schraubverbindung verwendete Werkzeug eingesetzt wird. Die Codierung kann in einer unüblichen Dimensionierung, beispielsweise abweichend von vorgegeben genormten Schraubentypen, und/oder einer unüblichen, insbesondere von Normen abweichenden Formgebung bestehen. Beispielsweise können tnnensechskantschrauben mit unüblichen Innendurchmessem der Sechskantaufnahme oder Innenfünfkantschrauben verwendet werden. Darüber hinaus können auch Schrauben oder Muttern verwendet werden, deren Aufnahmen unsymmetrisch ausgebildet sind.

Insbesondere zur Befestigung eines Anbauteils an einem Port mit einem hervorstehenden Stutzen ist es bei dem Anbauteil bevorzugt, daß die Befestigungseinrichtung eine Klemmeinrichtung zur Befestigung an der laserstrahlungsführenden Vorrichtung öder einem Moduls mittels einer Klemmverbindung umfaßt. Eine solche Befestigung erlaubt eine sehr variable Positionierung des Anbauteils an der laserstrahlungsführenden Vorrichtung und eignet sich insbesondere zur Nachrüstung von Mikroskopen, deren Ports einen rohr- bzw. stutzenförmigen, hervorstehenden Abschnitt aufweisen, an den ein Modul angeschlossen wird.

Besonders in dem Fall, daß das Anbauteil einfach und sicher in einer vorgegebenen Lage an der laserstrahlungsführenden Vorrichtung befestigt werden soll, ist es alternativ oder zusätzlich zu den bereits beschriebenen Befestigungsarten bevorzugt, daß die Befestigungseinrichtung ein Formelement umfaßt, mittels dessen eine formschlüssige Verbindung zwischen dem Anbauteil und der laserstrahlungsführenden Vorrichtung oder einem Modul für dieses herstellbar ist. Beispielsweise kann ein Port umlaufende Kanten oder Leisten aufweisen, die für eine formschlüssige Verbindung genutzt werden können.

Bei allen Alternativen kann die Befestigung des Anbauteils insbesondere auch an einem Modul erfolgen, das selbst über einen Port verfügt, an den ein weiteres Modul angeschlossen werden kann.

Das Gegenstück ist zur Verbindung mit einem Modul ausgebildet und weist dazu vorzugsweise eine Befestigungseinrichtung zur Befestigung an einem wechselbaren Modul für die Vorrichtung auf. Die Befestigungseinrichtung des Gegenstücks kann, ähnlich wie die eines Anbauteils, vorzugsweise eine Fläche zur stoffschlüssigen Verbindung mit einer vorgegebenen Fläche des Moduls und/oder wenigstens ein Loch für eine Schraube oder Niete und/oder eine Klemmeinrichtung zur Befestigung an dem Modul mittels einer Klemmverbindung und/oder ein Formelement, mittels dessen eine formschlüssige Verbindung zwischen dem Gegenstück und dem Modul herstellbar ist, umfassen. Auf diese Weise kann auch nachträglich ein Modul zur Verwendung mit dem erfindungsgemäßen Sicherungssystem nachgerüstet werden.

Soll ein Port nicht genutzt werden, muß er verschlossen werden. Dazu ist es bevorzugt, daß ein Gegenstück als Verschluß für einen Port der laserstrahlungsführenden Vorrichtung ausgebildet ist. Auf diese Weise kann einfach überprüft werden, ob ein mit einem Anbauteil ausgestatteter Port ordnungsgemäß verschlossen ist oder nicht. Ein solcher Verschluß ist auch als Modul im Sinne der Erfindung aufzufassen.

Die Form des Anbauteils und des Gegenstücks kann sich nach der Ausbildung des Ports bzw. des an diesen anzuschließenden Moduls richten.

Insbesondere zur Verwendung bei Ports mit einem von der laserstrahlungsführenden Vorrichtung hervorstehenden Stutzen ist es bevorzugt, daß das Anbauteil im an der laserstrahlungsführenden Vorrichtung befestigten Zustand einen Teil der laserstrahlungsführenden Vorrichtung umgreift. Das Gegenstück weist dann vorzugsweise eine ringförmige Aufnahme für einen zylindrischen Teil des Moduls auf. Insbesondere kann das Anbauteil bzw. das Gegenstück als Überwurf ausgebildet sein, der auf den Port bzw. das Modul aufgesteckt werden kann.

Zur Befestigung an dem Port oder dem Modul ist es bei dem Anbauteil bzw. dem Gegenstück dann jeweils bevorzugt, daß dieses ein Ringsegment und ein Schließsegment aufweist, die zusammengesetzt und an zwei Stellen aneinander befestigt ein Ringelement bilden. Das Ringelement kann dann den Port bzw. einen entsprechenden Abschnitt des Moduls umschließen. Ist das Schließsegment an den beiden Stellen lösbar mit dem Ringsegment verbunden, kann das Anbauteil bzw. das Gegenstück auch bei räumlich ungünstigen Verhältnissen an einem Port bzw. Modul einfach angebracht werden.

Vorzugsweise ist jedoch das Schließsegment an dem Ringsegment angelenkt. Es kann dann zur Befestigung von dem Ringsegment zunächst weggeklappt und nach Anlegen des Ringsegments an den Port bzw. das Modul in eine Schließlage geschwenkt werden, in der es an dem freien Ende lösbar mit dem Ringsegment verbunden werden kann.

Ist der Abschnitt des Ports bzw. des Moduls, an dem das Anbauteil bzw. das Gegenstück befestigt wird, an dem freien Ende zylindrisch, kann eine besonders einfache Montage dadurch ermöglicht werden, daß das Ringsegment einen Segmentwinkel von mehr als 180° aufweist. Das Ringsegment kann dann bereits bei einem Aufstecken auf den entsprechenden Abschnitt des Ports bzw. des Moduls zentriert werden, ohne daß das Schließsegment betätigt werden muß.

Bei Anbringung des Anbauteils an der laserstrahlungsführenden Vorrichtung muß dessen Lage relativ zu der Vorrichtung bzw. zu dem Gegenstück des an der Vorrichtung gehaltenen Moduls eingestellt werden. Diese Einstellung wird erleichtert, wenn das Anbauteil eine, vorzugsweise ebene, Anlagefläche für eine komplementäre Gegenfläche des Gegenstücks aufweist. Entsprechend weist das Gegenstück eine Gegenfläche auf, die zu der Anlagefläche des Anbauteils komplementär ist. Insbesondere können die Anlagefläche und die Gegenfläche aneinander anliegen, wenn das Gegenstück wenigstens in der vorgegebenen Orientierung zu dem Anbauteil um weniger als der Maximalabstand von dem Anbauteil beabstandet ist. Zur Einstellung der Lage des Anbauteils an der laserstrahlungsführenden Vorrichtung oder des Gegenstücks an dem Modul braucht nur das Modul mit dem daran gehaltenen Gegenstück an dem entsprechenden Port mit dem Anbauteil angebracht zu werden. Danach können Anbauteil und Gegenstück soweit aufeinander zu bewegt werden, daß deren Anlageflächen in Kontakt sind, woraufhin das Anbauteil bzw. das Gegenstück befestigt werden kann. Umgekehrt können nach der Montage von Anbauteil und Gegenstück die Anlagefläche und die Gegenfläche dazu genutzt werden, beim Anbau des Moduls als Einsteilhilfe zu dienen.

Das Anbauteil wird vorzugsweise nahe dem Port bzw. an dem Port angebracht. Um eine Befestigung eines Moduls an dem Port zu ermöglichen, weist das Anbauteil vorzugsweise eine Ausnehmung für ein Befestigungselement zur Befestigung des Moduls an der laserltrahlungsführenden Vorrichtung, insbesondere für eine Schraube zur Befestigung eines Moduls mit einer Ringschwalbe, auf. Besonders bevorzugt verfügt das ringförmige Anbauteil Ober mehrere solcher Ausnehmungen, so daß das Anbauteil bei einer Montage in verschiedene Winkellagen um die Ringachse drehbar ist.

Bei Verwendung von Ports einer vorgegebenen Form kann es notwendig sein, ein Modul unter Verwendung eines anderen Moduls, d.h. eines Adapters, anzuschließen. Insbesondere für diesen Fall, aber auch für Module, die entlang eines Strahlengangs hintereinander an einer laserstrahlungsführenden Vorrichtung gehalten sind, ist das Anbauteil vorzugsweise auch als Gegenstück für ein weiteres Anbauteil ausgebildet. Insbesondere kann das Anbauteil als Adapter oder Modul, an das wenigstens ein weiteres Modul angeschlossen werden kann, ausgebildet sein.

Die Erfindung wird bei laserstrahlungsführenden Vorrichtungen in Form von Mikroskopen angewendet. Bei den Mikroskopen kann es sich um beliebige Mikroskope mit Ports handeln, die einen Laser besitzen bzw. mit einem solchen ausgestattet werden können.

Die Erfindung wird im folgenden beispielhaft anhand der Zeichnungen noch weiter erläutert. Es zeigen:
- Fig. 1: eine schematische perspektivische Ansicht einer laserstrahlführenden Vorrichtung nach einer bevorzugten Ausführungsform der Erfindung in Gestalt eines Mikroskops und zweier vergrößerter Darstellungen von Bereichen mit Ports,
- Fig. 2: eine perspektivische Darstellung eines ersten Anbauteils nach einer bevorzugten Aus- führungsform der Erfindung an dem Mikroskop in Fig. 1,
- Fig. 3: eine im Bereich von Tastern teilweise geschnittene Draufsicht auf das erste Anbauteil in Fig. 2
- Fig. 4: zwei Schnittansichten des ersten Anbauteils entlang zu einer Ringebene orthogonal verlaufenden Schnittebenen, von denen die rechte nur teilweise geschnitten ist,
- Fig. 5: eine perspektivische Ansicht eines ersten Gegenstücks nach einer bevorzugten Ausfüh- rungsform der Erfindung für das erste Anbauteil in Fig. 2 bis 4,
- Fig. 6: eine Seitenansicht des ersten Gegenstücks in Fig. 5,
- Fig. 7: eine Schnittansicht des ersten Gegenstücks in Fig. 6 entlang der durch Pfeile in Fig. 5 gekennzeichneten Ebene,
- Fig. 8: eine perspektivische Ansicht eines Durchlichtarms des Mikroskops in Fig. 1,
- Fig. 9: eine Ansicht des Durchlichtarms in Fig. 8 von hinten,
- Fig. 10: eine Ansicht des Durchlichtarms in Fig. 8 von der Seite,
- Fig. 11: eine schematische perspektivische Abbildung eines Blindstopfens für das Mikroskop in Fig. 1,
- Fig. 12: eine schematische perspektivische Ansicht eines dritten Anbauteils mit einer darin an- geordnete Überwurfmutter,
- Fig. 13: eine teilweise geschnittene Draufsicht auf das dritte Anbauteil in Fig. 12,
- Fig. 14: eine teilweise geschnittene Seitenansicht des dritten Anbauteils in Fig. 12,
- Fig. 15: eine Ansicht eines Schnitts durch einen Port und einen Teil eines daran angeschlosse- nen Moduls mit dem dritten Anbauteil in Fig. 12,
- Fig. 16: eine schematische geschnittene Ansicht eines Ports, eines Kameraadapters und eines Teils einer Kamera des Mikroskops in Fig. 1,
- Fig. 17: eine schematische Darstellung eines Gesamtaufbaus eines Sicherheitssystems der laserstrahlungsführenden Vorrichtung in Fig. 1 und dessen Verbindung mit einer Steue- rung eines Lasers und einem elektrisch betätigbaren Shutter in der Vorrichtung,
- Fig. 18: eine schematische perspektivische Ansicht eines Anbauteils nach einer sechsten be- vorzugten Ausführungsform der Erfindung,
- Fig. 19: eine schematische perspektivische Ansicht eines Gegenstücks für das Anbauteil in Fig. 18 nach einer weiteren bevorzugten Ausführungsform der Erfindung, und
- Fig. 20: eine schematische Darstellung eines Gesamtaufbau eines Sicherheitssystems einer laserstrahlungsführenden Vorrichtung nach noch einer weiteren bevorzugten Ausfüh- rungsform der Erfindung und dessen Verbindung mit eines Steuerung eines Lasers und einem elektrisch betätigbaren Shutter in der Vorrichtung.

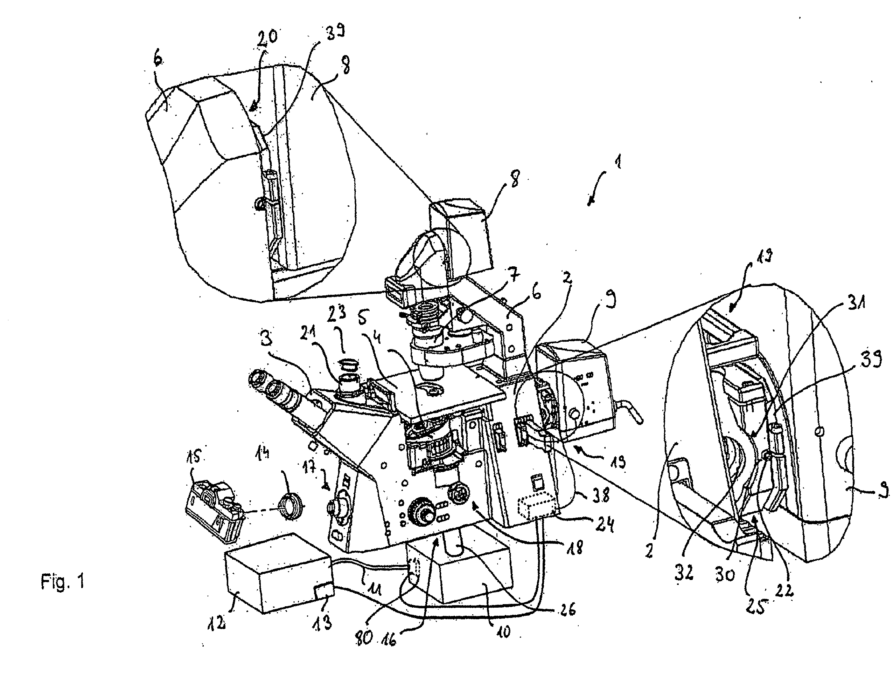

In Fig. 1 verfügt ein inverses Mikroskop 1 als laserstrahlungsführende Vorrichtung nach einer bevorzugten Ausführungsform der Erfindung über ein Basisstativ 2 mit einem werksseitig fest angeschlossenen Binokulartubus 3, einem Objektivrevolver 4, einem Objekttisch 5 und einem ebenfalls werksseitig fest montierten Durchlichtarm 6 mit einem Kondensor 7. Als von einem Benutzer wechselbare Module sind an den Durchlichtarm 6 eine Halogenlampe 8 und an das Basisstativ 2 eine Quecksilberdampflampe 9, ein Scanmodul 10, dem Laserstrahlung über einen Lichtleiter 11 von einem Laser 12 des Mikroskops 1 mit einer Steuerung 13 zugeführt wird, und ein Kameraadapter 14 sowie an diesen eine Kamera 15 angeschlossen.

Das Mikroskop 1 kann in Durch- und Auflichtbeleuchtung sowie als Laserscanning-Mikroskop betrieben werden. Während die Halogenlampe 8 an dem Durchlichtarm 6 zusammen mit dem Kondensor 7 zur Durchlichtbeleuchtung eines Objekts auf dem Objekttisch 5 dient, ist die Quecksilberlampe 9 zusammen mit einem Objektiv in dem Objektivrevolver 4 Teil einer Auflichtbeleuchtung. Der Laser 12 und das Scanmodul 10 ermöglichen einen Betrieb des Mikroskops 1 als Laserscanning-Mikroskop.

Die Kamera 15 dient zur Aufnahme von Bildern des Objekts.

Der Anschluß dieser von einem Benutzer austauschbaren Module oder anderer Module an das Mikroskop 1, d.h. das Basisstativ 2, den Durchlichtarm 6 und/oder den Binokulartubus 3, erfolgt über Ports.

Das Basisstativ 2 verfügt hierzu über einen nach unten weisenden Bodenport 16, einen nach vom weisenden Frontport 17, einen seitlichen Port 18 und einen rückseitigen Port 19, der Durchlichtarm 6 über einen zur Rückseite weisenden Port 20 und der Binokulartubus 3 über den Port 21 zum Anschluß einer TV-Kamera. Die Ports in dem Basisstativ 2 und dem Binokulartubus 3 sind über Kanäle in dem Basisstativ 2 und dem Binokulartubus 3 optisch miteinander verbunden, d.h. in den Bodenport 16 eindringende Laserstrahlung kann prinzipiell in jeden der anderen Ports gelangen, wobei jedoch je nach optischen Elementen in dem Strahlengang eine Abschwächung der Laserstrahlung erfolgen kann. Die Ports bis auf den Port 20 an dem Durchlichtarm 6 verfügen über einen gegenüber der Fläche, in dem der jeweilige Port angeordnet ist, hervorstehenden Stutzen mit einer kreiszylindrischen Umfangsfläche. Diese Stutzen der Ports sind jeweils bis auf ihre Länge gleich ausgebildet. In den Ports sitzen Befestigungsschrauben, mittels derer Module mit Ringschwalben an den Ports befestigbar sind. In der vergrößerten Darstellung des rückseitigen Ports 19 in Fig. 1 ist die entsprechende Befestigungsschraube mit dem Bezugszeichen 22 gekennzeichnet.

Während an den Bodenport 16 das Scanmodul 10, an den Frontport 17 der Kameraadapter 14 mit der Kamera 15, an den rückseitigen Port 19 die Quecksilberdampflampe 9 und an den Port 20 des Durchlichtarms 6 die Halogenlampe 8 angeschlossen sind, sind die anderen Ports durch gleich ausgebildete Verschlüsse in Form von Blindstopfen 23 verschlossen, die auch Module im Sinne der Erfindung bilden. In Fig. 1 ist der Übersichtlichkeit halber nur ein Blindstopfen 23 schematisch gezeigt.

Zum Schutz eines Benutzers vor ungewollt aus dem Mikroskop 1 austretender Laserstrahlung des Lasers 12 dient eine Sicherheitseinrichtung nach einer bevorzugten Ausführungsform der Erfindung, die an jedem der Ports ein Anbauteil, eine über Signalverbindungen mit den Anbauteilen verbundene Auswerteeinrichtung 24 sowie Gegenstücke zu den Anbauteilen verfügt Die Anbauteile und die Gegenstücke sind der Übersichtlichkeit halber in Fig. 1 nur teilweise gezeigt.

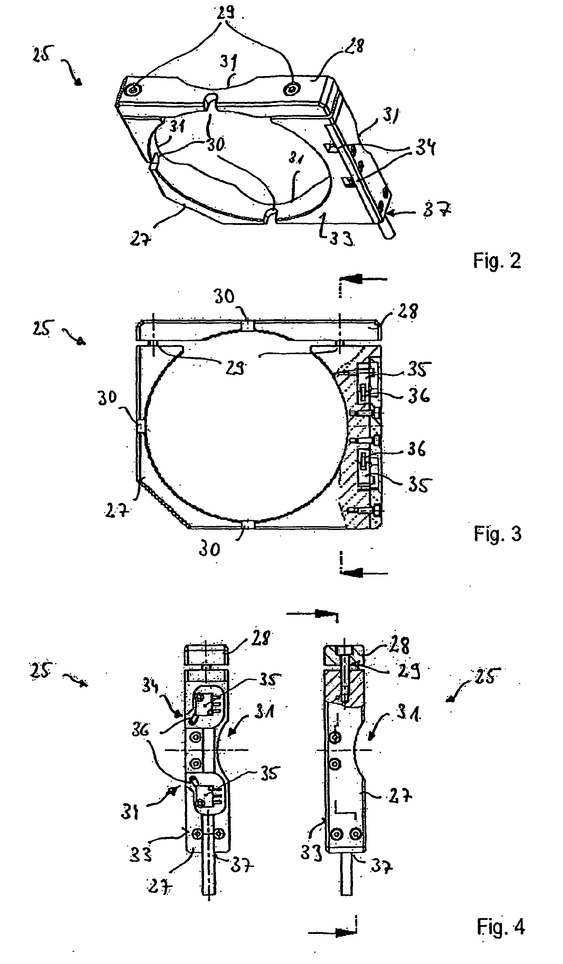

Die Figuren 2 bis 4 zeigen ein erstes Anbauteil 25, das zur Verwendung an einem Port mit einem Stutzen, beispielsweise an dem Bodenport 16 mit dem Stutzen 26, vorgesehen ist.

Das erste Anbauteil 25 besitzt ein Ringsegment 27 und ein Schließsegment 28 in Form eines Schließbügels, die zu einem Ringelement zusammensetzbar sind. Das Ringsegment 27 umschließt einen Segmentwinkel von mehr als 180°, ist aber an einer Seite offen. Sein Innendurchmesser entspricht dem Außendurchmesser der Stutzen der Ports. Der Schließbügel 28 weist eine kreisbogenförmige Ausnehmung auf, deren Durchmesser dem Innendurchmesser des Ringsegments 27 entspricht. Zwei Schraubverbindungen 29 verbinden die freien Enden des Ringsegments 27 und des Schließbügels 28.

Das Ringsegment 27 kann zusammen mit dem daran nur locker befestigten Schließbügel 28 als Ringelement bzw. Überwurf über den Stutzen 26 beispielsweise des Bodenports 16 geworfen werden. Daraufhin können die Schrauben der beiden Schraubverbindungen 29 angezogen werden, wobei durch entsprechende Ausbildung des Schließsegments 28 der Stutzen zwischen den beiden Segmenten eingeklemmt wird. Das Ringsegment 27, das Schließsegment 28 und die Schraubverbindungen 29 bilden daher eine Befestigungseinrichtung des ersten Anbauteils in Form einer Klemmeneinrichtung.

Damit nur bei der Herstellung des Mikroskops 1 oder nur durch einen Service-Techniker das erste Anbauteil 25 an einen Port an- und von diesem abgebaut werden kann, sind die Schrauben für die Schraubverbindungen 29 codiert und weisen hierzu als Werkzeugaufnahmen Ausnehmungen in ihrem Kopf mit einem unsymmetrisch fünfeckigen Querschnitt, d.h. einen Innenfünfkant, auf. Diese Werkzeugaufnahmen erfordern zum Anziehen oder Lösen der Schrauben ein entsprechendes spezielles Werkzeug, das nur dem Hersteller des Mikroskops oder Service-Technikern zu Verfügung steht. Ein einmal an einem Stutzen eines Ports angebrachtes erstes Anbauteil kann daher nur durch einen Service-Techniker mit entsprechendem Werkzeug, nicht aber einen Benutzer des Mikroskops 1 von diesem entfernt werden. Darüber hinaus sind die Schraubverbindungen nach Befestigung des ersten Anbauteils 25 an einem Port mittels eines auffälligen roten Lacks versiegelt, um anzuzeigen, daß die Schraubverbindungen nicht gelöst werden soll.

In dem ersten Anbauteil 25 sind in einem Winkel von 90° voneinander drei erste U-förmige Ausnehmungen 30 vorgesehen, die so ausgebildet und angeordnet sind, daß eine Befestigungsschraube für eine Ringschwalbenbefestigung eines Moduls, wie beispielsweise die in dem den rückseitigen Port 19 vergrößert zeigenden Ausschnitt in Fig. 1 gezeigte Befestigungsschraube 22, noch betätigt werden kann, wenn das erste Anbauteil 25 an dem Stutzen befestigt ist.

Gegenüber den ersten Ausnehmungen 30 sind ebenfalls in Winkelabständen von 90° vier kreisbogenförmige zweite Ausnehmungen 31 ausgebildet, die es erlauben, die ersten Anbauteile auch an schlecht zugänglichen Stellen wie zum Beispiel dem Bereich des rückseitigen Ports 19 zu verwenden, wo eine Justierhilfe 32 quer zur Richtung des in Fig. 1 nicht sichtbaren Stutzens des Ports 19 verläuft und im Bereich der zweiten Ausnehmungen 31 teilweise von dem ersten Anbauteil 25 umschlossen wird.

In einer parallel zu der Ringebene verlaufenden Anlagefläche 33 des Ringelements 27 sind in einem vorgegebenen Abstand voneinander zwei Öffnungen 34 ausgebildet, in denen als Gegenstücksensoren Taster 35 mit Betätigungselementen 36 versenkt angeordnet sind, so daß die Betätigungselemente 36 nicht aus der Anlagefläche 33 hervorstehen, auch wenn die Taster 35 nicht betätigt sind. Die Taster 35 sind über in den Fig. 2 bis 4 nicht gezeigte Leitungen mit Anschlüssen 37 für eine Signalleitung, in Fig. 1 ist nur die Signalleitung 38 gezeigt, zu der Auswerteeinrichtung 24 verbunden. In den Fig. 2 bis 4 sind die Schnittflächen, entlang derer die teilweisen Schnitte verlaufen durch gestrichelte Linien bzw. Pfeile angedeutet.

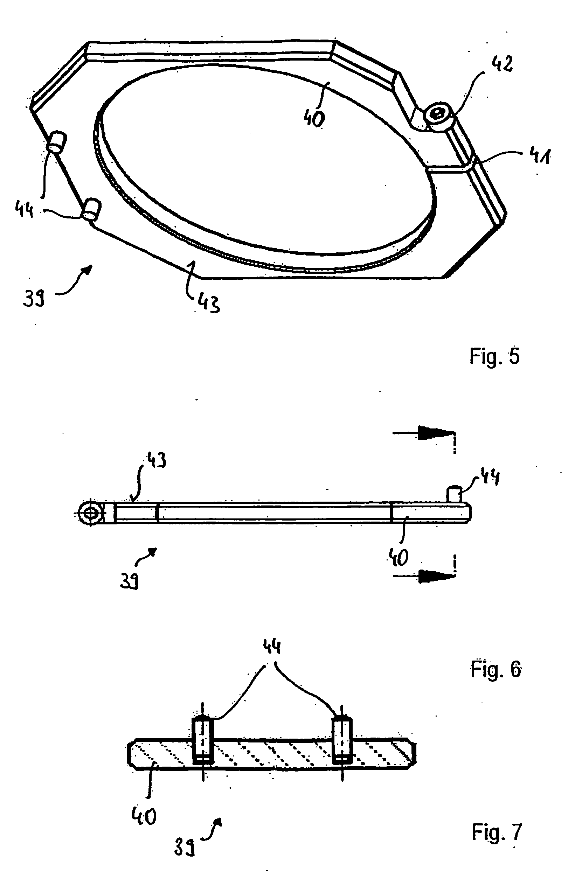

Die Fig. 5 bis 7 zeigen ein erstes Gegenstück 39 für das erste Anbauteil 25. Das erste Gegenstück 39 verfügt über einen flachen, ringförmigen Grundkörper 40, der sich an einem Schlitz 41 öffnet. Der Innendurchmesser des Grundkörpers 40 entspricht dem Außenduchmesser der Anschlüsse der Module. Die freien Enden des Grundkörpers 40 sind quer zu dem Schlitz 41 durch eine Schraube 42 zu einem Überwurf verbunden, so daß der Grundkörper 40 bzw. das erste Gegenstück 39 über eine Klemmverbindung an einem rohrförmigen Stutzen eines Moduls, der den Grundkörper 40 durchsetzt, befestigt werden kann.

In eine Gegenfläche 43 des ersten Gegenstücks, die parallel zu der Ringebene des Grundkörpers 40 bzw. des ersten Gegenstücks 39 verläuft und eine Gegenfläche für die Anlagefläche 33 des ersten Anbauteils 25 und die Anlageflächen anderer im folgenden noch geschilderter Anbauteile bildet, sind in einem dem Abstand der Taster 35 des ersten Anbauteils 25 entsprechenden Abstand voneinander in einer Richtung orthogonal zu der Gegenfläche 43 verlaufende Metallstifte 44 eingelassen. Diese stehen so weit von der Gegenfläche 43 ab, daß bei Anlage der Gegenfläche 43 des ersten Gegenstücks 39 an die Anlagefläche 33 des ersten Anbauteils 25 in einer geeigneten Orientierung die Metallstifte 44 in die Öffnungen 34 eindringen und die Betätigungselemente 36 und damit die Taster 35 betätigen, deren elektrischer Zustand dann von nichtleitend zu leitend wechselt. Die Metallstifte 44 stellen daher eine spezielle Ausführungsform für einen eine Erkennungseinrichtung bildenden Vorsprung des ersten Gegenstücks 39 dar. Die Metallstifte 44 und die Öffnungen 34 bzw. die Taster 35 sind dabei so angeordnet, daß die Metallstifte 44 nur dann in die Öffnungen 34 eintreten können, wenn das Modul, an der das Gegenstück 39 befestigt ist, korrekt an einen entsprechenden Port mit dem daran gehaltenen ersten Anbauteil 25 bzw. einem anderen entsprechenden Anbauteil angeschlossen ist.

Die Anordnung von ersten Gegenstücken 39 an entsprechenden Modulen, nämlich der Quecksilberdampflampe 9 und der Halogenlampe 8, ist detailliert in den vergrößerten Bereichen in Fig. 1 gezeigt.

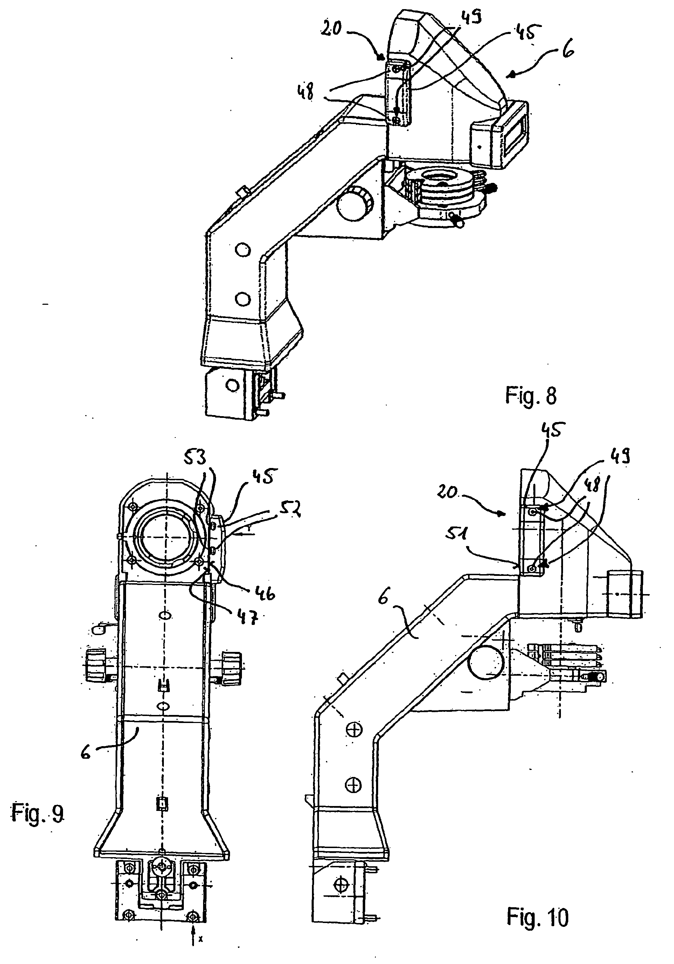

Ein zweites Anbauteil 45, das eine zweite Ausführungsform von erfindungsgemäßen Anbauteilen, sichert den Port 20 an dem Durchlichtarm 6, der in den Fig. 8 bis 10 genauer gezeigt ist.

Der Port 20 ist in einem Kopfteil des Durchlichtarms 6 versenkt, so daß von der entsprechenden Oberfläche des Durchlichtarms 6 kein Stutzen absteht, an dem ein erstes Anbauteil 25 befestigt werden könnte.

Das zweite Anbauteil 45 weist daher zur Befestigung an einer Seitenfläche des Durchlichtarms 6 im Bereich des Ports 20 als Befestigungseinrichtung eine ebene Befestigungsfläche 46, die formschlüssig an einer Befestigungsfläche 47 des Durchlichtarms sitzt, sowie Schraubenlöcher 48 und Schrauben 49, die wie bei dem ersten Anbauteil 25 codiert sind, auf. Die Schrauben 49 sind in Gewindelöcher in dem Durchlichtarm 6 eingedreht und ermöglichen so auch eine Ausrichtung des zweiten Anbauteils 45 relativ zu dem Durchlichtarm 6 und damit dem Port 20. Soll die Verwendung von Schrauben vermieden werden, kann das zweite Anbauteil 45 auch mit der Befestigungsfläche 47 an der Seite des Durchlichtarms 6 durch eine stoffschlüssige Verbindung, beispielsweise eine Klebeverbindung, verbunden sein.

Eine Anlagefläche 51 des zweiten Anbauteils 45 fluchtet mit der Stirnfläche des Durchlichtarms 6 im Bereich des Ports 20. In der Anlagefläche 51 sind in dem gleichen Abstand wie bei dem ersten Anbauelement 25 zwei Öffnungen 52 angeordnet, in denen Taster 53 mit in den Figuren nicht gezeigten Betätigungselementen angeordnet sind. Die Taster 53 sind mit in den Figuren nicht gezeigten Anschlüssen für Signalleitungen zu der Auswerteeinrichtung 24 verbunden. Die Anordnung der Taster 53 und der Betätigungselemente relativ zu der Anlagefläche 51 entspricht genau der der Taster 35 und der Betätigungselemente 36 des ersten Anbauteils 25, so daß die als Gegenstücksensoren dienenden Taster 53 in gleicher Weise durch das erste Gegenstück 39 betätigt werden können. Diese Situation ist in der vergrößerten Darstellung des Bereichs des Ports 20 in Fig. 1 teilweise dargestellt. Das erste Gegenstück 39 ist an einem Stutzen der Halogenlampe 8 gehalten und liegt mit seiner Gegenfläche 43 an der Stirnfläche des Durchlichtarms 6 im Bereich des Ports 20 und damit an der Anlagefläche 51 an, wobei die Metalistifte 44 in die Öffnungen 52 ragen und über die Betätigungselemente die Taster 53 betätigen.

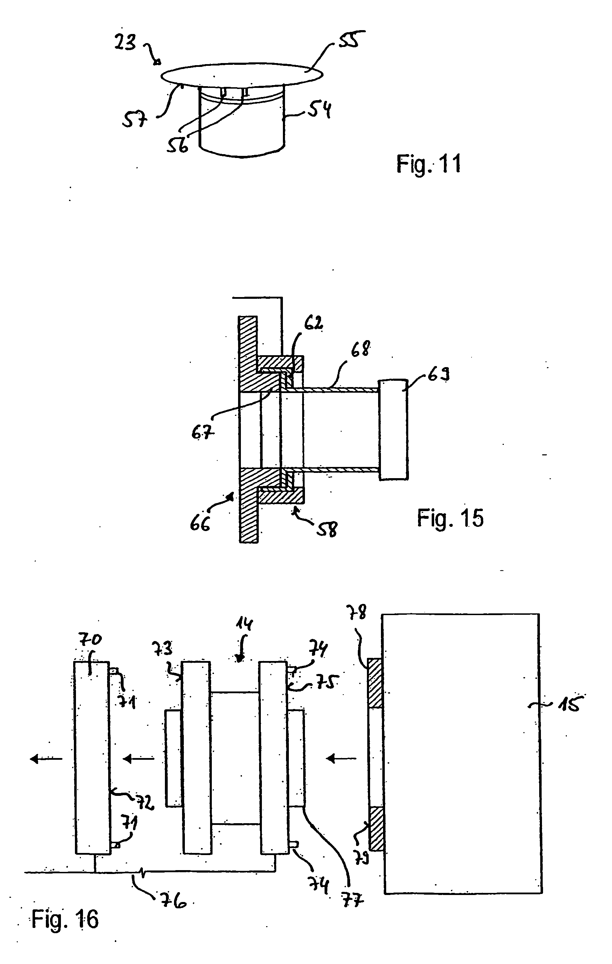

Fig. 11 zeigt schematisch den Blindstopfen 23, der einen Verschluß für Ports bildet und gleichzeitig eine zweite Ausführungsform eines Gegenstücks für ein Anbauteil darstellt. Der Blindstopfen 23 verfügt über einen kurzen Stutzen 54 mit einer nur schematisch gezeigten Ringschwalbe an einem Deckel 55, dessen Außendurchmesser so groß gewählt ist, daß er über den Bereich der Öffnungen von Anbauteilen im Bereich der jeweiligen Ports reicht. An der Unterseite des Deckels 55 sind wiederum zwei Metallstifte 56 an einer Gegenfläche 57 gehalten, die relativ zueinander und zu der Gegenfläche 57 in gleicher Weise angeordnet sind, wie die Metallstifte 44 des ersten Gegenstücks 39. Bei Verschließen eines Ports mit dem Blindstopfen 23 in der Weise, daß dessen Gegenfläche 57 an einer entsprechenden Anlagefläche 33 bzw. 51 eines ersten oder zweiten Anbauteils 25 bzw. 45 anliegt, ragen die Metallstifte 56 bei geeigneter Orientierung des Blindstopfens 23 relativ zu dem Anbauteil in dessen Öffnungen und betätigen die Taster darin.

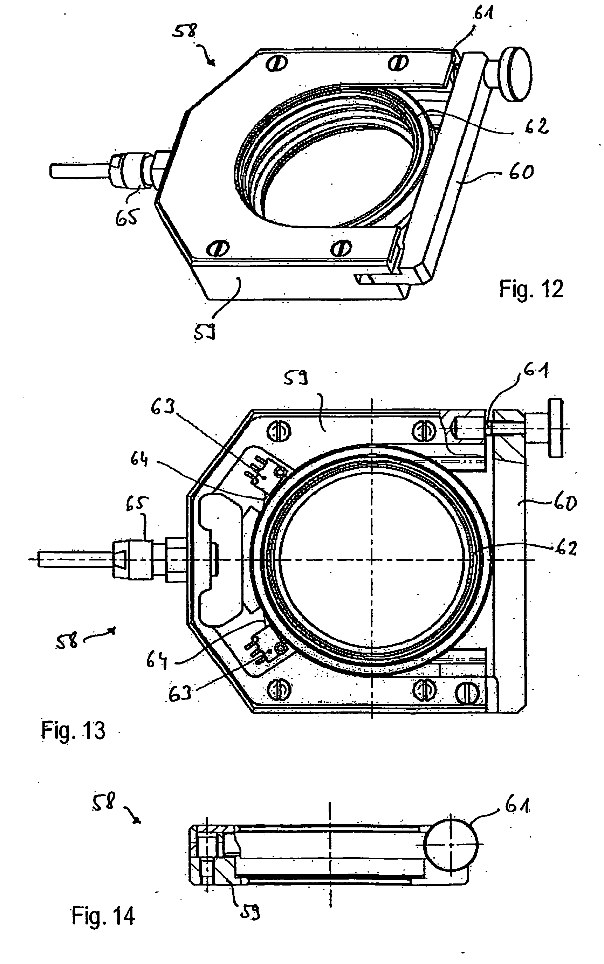

Die Fig. 12 bis 15 zeigen eine dritte Ausführungsform eines Anbauteils bzw. ein drittes Anbauteil 58, das zur Sicherung einer Schnittstelle bzw. eines Ports dient, an die bzw. den ein Modul mittels einer Überwurfmutter angeschlossen ist.

Das dritte Anbauteil 58 verfügt über ein Ringsegment 59 mit U-Form und ein an einem freien Ende des Ringsegments 59 angelenktes Schließsegment 60 in Form eines Schließbügels, das zwischen einer geöffneten Stellung und einer geschlossenen Stellung hin- und herschwenkbar ist. In der geschlossenen Stellung ist das freie Ende des Schließsegments 60 mittels einer Schraube 61 mit dem entsprechenden freien Ende des Ringsegments 59 verbindbar, wodurch ein Ringelement bzw. Überwurf entsteht, das eine Überwurfmutter 62 aufnimmt.

Das Ringsegment 59 weist in einer Schnittebene senkrecht zu der Ringebene einen U-förmigen Querschnitt auf, der in Verbindung mit dem Innendurchmesser der Öffnung des Ringsegments 59 in der Ringebene so gewählt ist, daß sich zwischen der Überwurfmutter 62 und dem Ringsegment 59 ein Formschluß ergibt.

In dem Ringsegment 59 sind als Gegenstücksensoren zwei Taster 63 mit Betätigungselementen 64 angeordnet. Die Betätigungsrichtungen der Betätigungselemente 64 bzw. der Taster 63 verlaufen in radialer Richtung in der Ringebene. Dabei sind die Betätigungselemente 64 so angeordnet, daß sie nur durch die Überwurfmutter 62 als Gegenstück betätigt werden können, wenn diese in das Ringsegement 59 hinreichend weit eingeschoben ist und das Ringsegment 59 durch das Schließsegment 60 geschlossen werden kann. Die Taster 63 sind über in den Figuren nicht gezeigte Leitungen mit Anschlüssen 65 zum Anschluß von Signalleitungen zu der Auswerteeinrichtung 24 verbunden.

Die Sicherung eines Ports durch das dritte Anbauteil 58 ist in Fig. 15 genauer gezeigt. Auf einem Port 66 mit einem Stutzen 67 mit Außengewinde sitzt ein Stutzen 68 eines nur schematisch gezeigten Moduls 69. Die Überwurfmutter 62 greift hinter einen Flansch des Stutzens 68, so daß bei Aufdrehen der Überwurfmutter 62 auf das Außengewinde des Ports 66 das Modul 69 an diesen gezogen wird. Das dritte Anbauteil 58 umschließt die Überwurfmutter 62, die nicht mehr ohne Änderung des elektrischen Zustands der Gegenstücksensoren 63 des dritten Anbauteils 58 gelöst werden kann.

In Fig. 16 sind vierte und fünfte Anbauteile gezeigt, die im Beispiel zum Anschluß der Kamera 15 dienen.

Das vierte Anbauteil 70 unterscheidet sich von dem ersten Anbauteil 25 dadurch, daß nun die Taster mit den Betätigungselementen 71 auf gegenüberliegenden Seiten in einer Ringebene angeordnet sind, wobei die Betätigungselemente 71 von einer Anlagefläche 72 abstehen.

Der Kameraadapter 14, der auch als Modul aufzufassen ist, bildet zugleich das fünfte Anbauteil und ein Gegenstück zu dem vierten Anbauteil 70.

Eine erste ebene, ringförmige Gegenfläche 73 dient als Erkennungseinrichtung für die als Gegenstücksensoren dienenden Taster des vierten Anbauteils 70 mit den Betätigungselementen 71, die bei Befestigung des Kameraadapters 14 mittels eines Gewindes an einem in der Figur nicht gezeigten Port durch die Gegenfläche 73 unabhängig von der Drehstellung betätigt werden, wenn die Gegenfläche 73 an der Anlagefläche 72 anliegt.

Die der Gegenfläche 73 gegenüberliegende Seite des Kameraadapters 14 ist wie das vierte Anbauteil 70 ausgebildet und verfügt über zwei Taster 74 mit Betätigungselementen, die von einer Anlagefläche 75 abstehen. Die Taster 74 sind auch hier jeweils über Signalleitungen 76 mit der Auswerteeinrichtung 24 verbunden.

Jedoch ragt aus der Mitte des Kameraadapters 14 bzw. der Anlagefläche 75 ein Kamerastutzen 77 hervor, an den-die Kamera 15 angeschlossen wird. Ein drittes ringförmiges Gegenstück 78, das an der Kamera 15 gehalten ist, betätigt die Taster des Kameraadapters 14, wenn eine Gegenfläche 79 des Gegenstücks 78 an der Anlagefläche 75 anliegt.

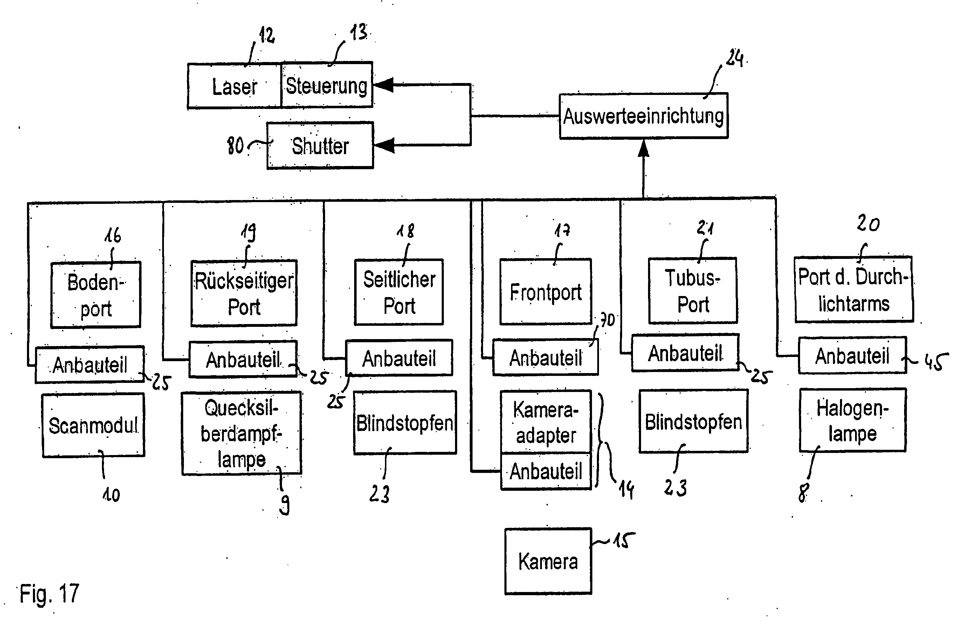

Fig. 17 veranschaulicht den Gesamtaufbau des Sicherheitssystems und dessen Verbindung mit der Steuerung 13 des Lasers 12 und einer Laserstrahlungs-Sperreinrichtung in Gestalt eines elektrisch betätigbaren Shutters 80, der unmittelbar nach dem Lichtleiter 11 in dem Strahlengang der Laserstrahlung in dem Scanmodul 10 angeordnet ist.

In Fig. 17 sind unter den Ports jeweils die Module gezeigt, die direkt oder über ein anderes Modul, beispielsweise in Form eines Adapters wie dem Kameraadapter 14, mit den jeweiligen Ports verbunden sind. Die Linien veranschaulichen dabei die Signalverbindungen zwischen den Anbauteilen an den Ports und der Auswerteeinrichtung 24. Diese verfügt zur Überwachung der elektrischen Zustände der Anbauteile und gegebenenfalls Abgabe von Steuersignalen an die Steuerung 13 und den Shutter 80 über entsprechende Schnittstellen und einen programmierbaren Mikroprozessor, der zur Durchführung eines Verfahrens zum Schutz eines Benutzers der laserstrahlungsführenden Vorrichtung bzw. des Mikroskops 1 nach einer bevorzugten Ausführungsform der Erfindung programmiert ist.

An jedem Port ist ein Anbauteil angeordnet. Die elektrischen Zustände der Gegenstücksensoren der Anbauteile, d.h. der Taster der Anbauteile, werden von der Auswerteeinrichtung 24 überwacht. Dabei werden die Zustände der Gegenstücksensoren eines Anbauteils gemeinsam überwacht, so daß das Vorhandensein eines Gegenstücks nur erfaßt wird, wenn beide Gegenstücksensoren den entsprechenden elektrischen Zustand aufweisen. Im Beispiel überwacht die Auswerteeinrichtung 24, ob bei allen Anbauteilen beide Gegenstücksensoren bzw. Taster in einem elektrisch leitenden Zustand sind. Ist dies der Fall, wird ein sicherer Zustand des Mikroskops 1 bzw. der Ports erkannt. Wenn jedoch einer der Gegenstücksensoren in einem nichtleitenden Zustand ist, erkennt die Auswerteeinrichtung 24 einen unsicherer Zustand des Ports und gibt ein Steuersignal an die Steuerung 13 des Lasers 12 ab, die daraufhin den Laser 12 abschaltet. Parallel wird das Steuersignal dem Shutter 80 zugeführt, der daraufhin den Strahlengang von dem Laser 12 bzw. dem Lichtleiter 11 in das Scanmodul 10 blockiert, so daß augengefährdende Laserstrahlung nicht in den Bereich der Ports gelangen kann.

Die Auswerteeinrichtung 24 kann auf einer geeigneten Anzeigeeinrichtung anzeigen, an welchem der Ports ein unsicherer Zustand erkannt wurde.

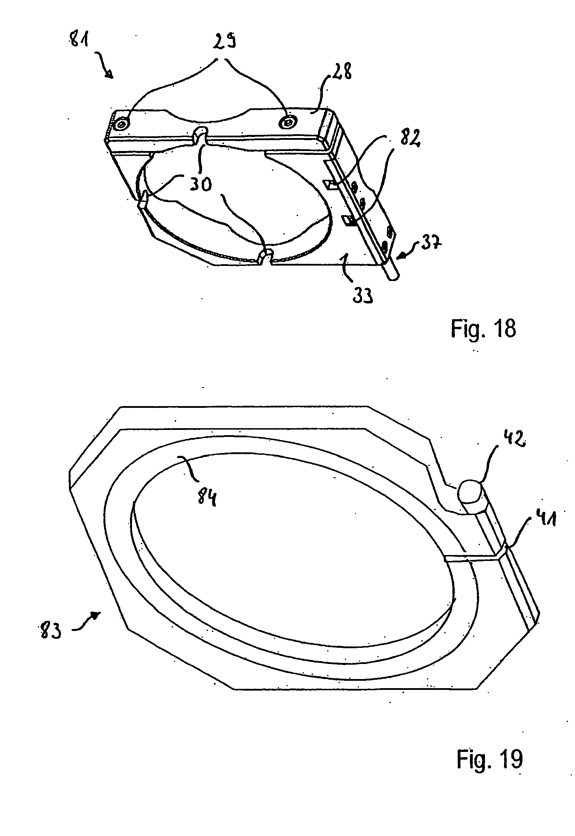

Bei einer weiteren bevorzugten Ausführungsform des Sicherheitssystems werden auch in Fig. 18 schematisch gezeigte Anbauteile 81 nach einer sechsten bevorzugten Ausführungsform der Erfindung verwendet, die sich von den ersten Anbauteilen 25 des ersten Ausführungsbeispiels dadurch unterscheiden, daß als Gegenstücksensoren nicht Taster mit Betätigungselementen dienen, sondern Hall-Sensoren 82, die ebenfalls in entsprechenden Öffnungen versenkt angeordnet sind.

Weiterhin werden den Anbauteilen 81 entsprechende, in Fig. 19 veranschaulichte Gegenstücke 83 verwendet, die sich von den ersten Gegenstücken 39 dadurch unterscheiden, daß statt der Metallstifte 44 als Erkennungseinrichtung nun ringförmige Magnete 84 in die Anlageflächen eingelassen sind, die in den Hall-Sensoren 82 eine von der Auswerteeinrichtung 24 detektierbare Hall-Spannung erzeugt, die den elektrischen Zustand der Gegenstücksensoren darstellt.

Die Gegenstücke 83 sind frei gegenüber den Anbauteilen 81 in der jeweiligen Ringebene drehbar, so daß sich eine Kombination aus dem Anbauteil 81 und einem Gegenstück 83 als Ersatz für die dritten Anbauteile 58 eignet. Ein Anbauteil 81 kann dazu an einem Port und ein entsprechendes Gegenstück 83 an der Überwurfmutter 62 des Moduls angebracht werden, so daß das Gegenstück 83 detektiert wird, wenn es an dem Anbauteil 81 anliegt.

Ein Anbauteil nach einer weiteren bevorzugten Ausführungsform der Erfindung unterscheidet sich von dem ersten Ausführungsbeispiel eines Anbauteils dadurch, daß die Taster jeweils durch zwei in den Öffnungen angeordnete Federtcontakte ersetzt sind, die durch die Metallstifte 44 des ersten Gegenstücks kurzschließbar sind.

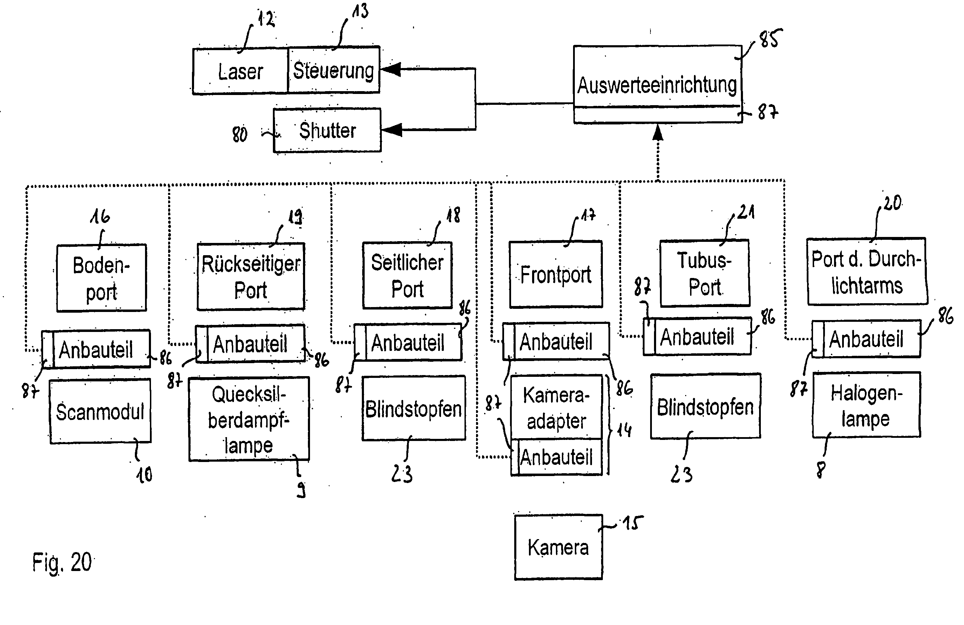

Bei noch einer weiteren in Fig. 20 veranschaulichten bevorzugten Ausführungsform des erfindungsgemäßen Sicherheitssystems erfolgt die Signalübertragung zwischen den Gegenstücksensoren bzw. Anbauteilen und der Auswerteeinrichtung nicht leitungsgebunden, sondern funkgestülzt.

Dazu verfügen die Auswerteeinrichtung 85 und die nicht unbedingt gleich ausgebildeten Anbauteile 86 jeweils über eine Funksende- und Empfangseinrichtung 87 nach dem "bluetooth"-Standard. Die Funksende- und Empfangseinrichtung 87 in einem der Anbauteile ist jeweils mit den Gegenstücksensoren des Anbauteils verbunden. Eine Stromversorgung kann über Schleifkontakte an den Ports erfolgen.

Bei einem weiteren Ausführungsbeispiel verfügen die Gegenstücke über RFID-Bauelemente und die Anbauteile oder das Mikroskop selbst über eine Antenne und eine mit dieser verbundenen Sende-/Empfangseinrichtung, mittels derer abfragbar ist, ob sich ein RFID-Bauelement in wenigstens einer vorgegebenen Lage relativ zu der Antenne befindet. Vorzugsweise ist die Reichweite der von der Sende-/Empfangseinrichtung oder dem RFID-Bauelement abgegebenen elektromagnetischen Strahlung so kurzreichweitig, daß eine Erkennung nur eintritt, wenn der Abstand zwischen dem RFID-Bauelement und der Antenne einen vorgegebenen Maximalabstand unterschreitet. Der Maximalabstand ist so gewählt, daß eine Erkennung durch einen Gegenstücksensor des Anbauteils bzw. einen unmittelbar an dem Mikroskop gehaltenen Gegenstücksensor nur erfolgt, wenn das Gegenstück relativ zu dem Anbauteil oder dem Mikroskop eine Lage einnimmt, die ein Austreten von augengefährdender Strahlung aus dem entsprechenden Port ausschließt.

## Patentansprüche

1. Zur Nachrüstung vorgesehenes Sicherheitssystem für laserstrahlungsführendes Mikroskop (1), das Ports aufweist, an denen jeweils Laserstrahlung aus dem Mikroskop (1) austreten kann, und das mindestens ein Modul umfaßt, das zum Anschluß an einen der Ports ausgebildet ist, wobei das Sicherheitssystem aufweist;
- ein Gegenstück, das wenigstens eine Erkennungseinrichtung (44, 79, 84) und eine Gegenstück-Befestigungseinrichtung (40, 41, 42) zur Befestigung an dem Modul aufweist, mindestens zwei Anbauteile (25, 45, 58, 70, 14, 81, 86), die jeweils umfassen eine Anbauteil-Befestigungseinrichtung (27, 28, 29; 46, 48, 49; 59 60, 61) zur Befestigung des Anbauteils (25, 45, 58, 70, 14, 81 , 86) an einem der Ports und mindestens einen Gegenstücksensor (35, 53, 63, 74, 82), dessen elektrischer Zustand davon abhängt, ob das Gegenstück (39, 62, 78, 83) in wenigstens einer vorgegebenen Orientierung zu dem Anbauteil (25, 45, 58; 70, 14, 81 , 86) um weniger als ein Maximalabstand von dem jeweiligen Anbauteil (25, 45, 58, 70, 14, 81, 86) beabstandet ist, und
- eine mit den Anbauteilen (25, 45, 58, 70, 14, 81 , 86) über eine Signalverbindung (38, 76) verbundene Auswerteeinrichtung (24, 85), die den elektrischen Zustand der Gegenstücksensoren (35, 53, 63, 74, 82) erfaßt und in Abhängigkeit vom erfaßten Zustand ein Steuersignal an eine Steuerung eines Lasers (12) oder eine Vorrichtung zum Sperren von Strahlung des Lasers (12) abgibt.

2. Sicherheitssystem nach Anspruch 1, wobei bei mindestens einem der Anbauteile der Gegenstücksensor einen Taster (35, 53, 63, 74) aufweist, der durch wenigstens einen Abschnitt des Gegenstücks (39, 78) betätigbar ist.

3. Sicherheitssystem nach Anspruch 2, bei dem ein freies Ende eines Betätigungselements (36, 64) des Tasters (35, 53, 63) in dem Anbauteil (25, 45, 58, 86) versenkt ist.

4. Sicherheitssystem nach Anspruch 1, wobei der Gegenstücksensor mindestens eines der Anbauteile zwei elektrische Kontakte aufweist, die mittels eines vorgegebenen elektrisch leitenden Bereichs des Gegenstücks elektrisch miteinander verbindbar sind.

5. Sicherheitssystem nach Anspruch 1, bei dem als Gegenstücksensor (82) mindestens eines der Anbauteile ein magnetfeldempfindlicher Sensor, insbesondere ein Hall-Sensor, vorgesehen ist.

6. Sicherheitssystem nach einem der vorhergehenden Ansprüche, bei dem der Gegenstücksensor mindestens eines der Anbauteile mit einer Funksendeeinrichtung (87) verbunden ist, über die ein Signal abgebbar ist, das den elektrischen Zustand des Gegenstücksensors wiedergibt.

7. Sicherheitssystem nach einem der vorhergehenden Ansprüche, bei dem die Befestigungseinrichtung mindestens eines der Anbauteile eine Fläche (46) zur stoffschlüssigen Verbindung mit einer vorgegebenen Fläche (47) des Mikroskopes (1) oder eines Moduls für diese umfaßt.

8. Sicherheitssystem nach einem der Ansprüche 1 bis 7, bei dem mindestens eine der Anbauteil-Befestigungseinrichtungen ein Loch (48) für eine Schraube (49) umfaßt.

9. Sicherheitssystem nach Anspruch 8, bei dem mindestens eine der Anbauteil-Befestigungseinrichtungen wenigstens eine Schraube (29) und/oder Mutter mit einer codierten Werkzeugaufnahme umfaßt.

10. Sicherheitssystem nach einem der vorhergehenden Ansprüche, bei dem mindestens eine der Anbauteil-Befestigungseinrichtungen eine Klemmeinrichtung (27, 28, 29) zur Befestigung an dem Mikroskop (1) oder dem Modul mittels einer Klemmverbindung umfaßt.

11. Sicherheitssystem nach einem der vorhergehenden Ansprüche, bei dem mindestens eine der Anbauteil-Befestigungseinrichtungen ein Formelement (59) umfaßt, mittels dessen eine formschlüssige Verbindung zwischen dem jeweiligen Anbauteil und dem Mikroskop (1) bzw. dem Modul (69) herstellbar ist.

12. Sicherheitssystem nach einem der vorhergehenden Ansprüche, wobei mindestens eines der Anbauteile im an dem laserstrahlungsführenden Mikroskop (1) befestigten Zustand einen Teil (26) des laserstrahlungsführenden Mikroskops (1) umgreift.

13. Sicherheitssystem nach Anspruch 12, wobei mindestens eines der Anbauteile ein Ringsegment (27, 59) und ein Schließsegment (28, 60) aufweist, die zusammengesetzt und an ihren freien Ende aneinander befestigt ein Ringelement bilden.

14. Sicherheitssystem nach Anspruch 13, bei dem das Schließsegment (60) an dem Ringsegment (59) angelenkt ist.

15. Sicherheitssystem nach einem der vorhergehenden Ansprüche, wobei mindestens eines der Anbauteile eine, vorzugsweise ebene, Anlagefläche (33, 51 , 72, 75) für eine komplementäre Gegenfläche (43, 73, 79) des Gegenstücks (39, 14, 78) aufweist.

16. Sicherheitssystem nach einem der vorhergehenden Ansprüche, wobei das Modul ein Befestigunciselement (22) und mindestens eines der Anbauteile eine Ausnehmung (30) für das Befestigungselement (22) zur Befestigung des Moduls (9) an dem laserstrahlungsführenden Mikroskop (1) aufweist.

17. Sicherheitssystem nach einem der vorhergehenden Ansprüche, das auch als Gegenstück (14) für ein drittes Anbauteil (70) ausgebildet ist.

18. Sicherheitssystem nach Anspruch 3, bei dessen Gegenstück die Erkennungseinrichtung mindestens einen Vorsprung (44) aufweist, der den Taster (35, 53, 63, 74) betätigt, wenn das Gegenstück (14, 39, 62, 78) in der vorgegebenen Orientierung zu einem der Anbauteile (25, 45, 58, 70, 14, 81, 86) um weniger als denMaximalabstand von dem Anbauteil (25, 45, 58, 70, 14, 86) beabstandet ist.

19. Sicherheitssystem nach Anspruch 4, bei dessen Gegenstück die Erkennungseinrichtung mindestens einen elektrisch leitenden Vorsprung (44) aufweist, der die elektrischen Kontakte kurzschließt, wenn das Gegenstück in der vorgegebenen Orientierung zu dem Anbauteil um weniger als den Maximalabstand von dem entsprechenden Anbauteil beabstandet ist.

20. Sicherheitssystem nach einem der obigen Ansprüche, bei dessen Gegenstück die Erkennungseinrichtung einen Magneten (84), insbesondere in Ringform, umfaßt.

21. Sicherheitssystem nach einem der obigen Ansprüche, dessen Gegenstück eine ringförmige Aufnahme (40) für einen zylindrischen Teil (26) des Moduls (10) aufweist.

22. Sicherheitssystem nach einem der obigen Ansprüche, dessen Gegenstück als Verschluß (23) für einen Port (16, 17, 18, 19, 20, 21) des laserstrahlungsführenden Mikroskops (1) ausgebildet ist.

23. Sicherheitssystem nach Anspruch 16, dessen Gegenstück eine Gegenfläche (43, 57, 73, 79) aufweist, die zu der Anlagefläche des entsprechenden Anbauteils (25, 45, 58, 70, 14) komplementär ist.

24. Sicherheitssystem nach einem der obigen Ansprüche das als Steuersignal ein Signal abgibt, das den Laser (12) deaktiviert oder die die Laserstrahlung blockiert wenn der Gegenstücksensor (35, 53, 63, 74, 82) kein Gegenstück (39, 62, 78, 83) erfaßt.

25. Sicherheitssystem nach einem der obigen Ansprüche, bei dem wenigstens eines der Anbauteile (86) eine mit dem Gegenstücksensor verbundene Funksendeeinrichtung (87) und die Auswerteeinrichtung (85) eine entsprechende Funkempfangseinrichtung (87) aufweisen, so daß die Signalverbindung zwischen diesem Anbauteil (86) und der Auswerteeinrichtung (87) funkgestützt ist.

## Claims

1. A safety system provided for re-fitting of a laser radiation-guiding microscope (1), comprising ports at which laser radiation can exit the microscope (1), and at least one module being adapted to be connected to one of the ports, wherein the safety system comprises:
- a joining part comprising at least one detecting device (44, 79, 84) and a joining part mounting unit (40, 41, 42) for mounting to the module,
- at least two attachments (25, 45, 58, 70, 14, 81, 86) which each comprise an attachment mounting unit (27, 28, 29; 46, 48, 49; 59 60, 61) for mounting the attachment (25, 45, 58, 70, 14, 81, 86) to one of the ports and at least one joining part sensor (35, 53, 63, 74, 82), whose electrical condition depends on whether the joining part (39, 62, 78, 83) is located within a maximum reach of the respective attachment (25, 45, 58, 70, 14, 81, 86) in a predetermined orientation relative to the respective attachment (25, 45, 58, 70, 14, 81, 86), and
- an evaluating unit (24, 85), which is connected to the at least two attachments (25, 45, 58, 70, 14, 81, 86) via a signal link (38, 76), detects the electrical conditions of the joining part sensors (35, 53, 63, 74, 82) and, depending on the detected conditions, emits a control signal to a control unit (13) of a laser (12) for the device (1) or to a laser radiation-blocking device (80).

2. The safety system as claimed in Claim 1, wherein at least one of the attachments comprises a feeler (35, 53, 63, 74), which can be actuated by at least one portion of the joining part (39, 78), is provided as the joining part sensor.

3. The safety system as claimed in Claim 2, wherein a free end of an actuating element (36, 64) of the feeler (35, 53, 63) is sunk into the attachment (25, 45, 58, 86).

4. The safety system as claimed in Claim 1, wherein the joining part sensor of at least one of the attachments comprises two electric contacts which are electrically connectable to each other by means of a predetermined electrically conducting region of the joining part.

5. The safety system as claimed in Claim 1, wherein a sensor responsive to magnetic fields, in particular a Hall sensor, is provided as the joining part sensor (82) of at least one of the attachments.

6. The safety system as claimed in any one of the preceding claims, wherein the joining part sensor of at least one of the attachments is connected to a radio transmission unit (87) via which a signal can be emitted which indicates the electrical condition of the joining part sensor.

7. The safety system as claimed in any one of the preceding claims, wherein the mounting unit of at least one of the attachments comprises a surface (46) for firm bonding to a predetermined surface (47) of the microscope (1) or of a module for the latter.

8. The safety system as claimed in any one of Claims 1 to 7, wherein at least one of the attachment mounting units comprises a screwhole (48) for a bolt (49).

9. The safety system as claimed in Claim 8, wherein at least one of the mounting attachment units comprises at least one bolt (29) and/or nut with an encoded tool mount.

10. The safety system as claimed in any one of the preceding Claims, wherein at least one of the attachment mounting units comprises a clamping unit (27, 28, 29) for mounting by means of a clamping connection to the microscope (1) or to a module.

11. The safety system as claimed in any one of the preceding Claims, wherein at least one of the attachment mounting units comprises a shaped body (59), by means of which an interlocking connection can be established between the respective attachment and the microscope (1) or a module (69) for the latter.

12. The safety system as claimed in any one of the preceding Claims, wherein at least one of the attachments, in a condition fixed to the laser radiation-guiding microscope (1), encompasses a portion (26) of the laser radiation-guiding microscope (1).

13. The safety system as claimed in Claim 12, wherein at least one of the attachments comprises a ring segment (27, 59) and a locking segment (28, 60) which together form a ring element when assembled and fixed to each other at their free ends.

14. The safety system as claimed in Claim 13, wherein the locking segment (60) is articulated to the ring segment (59).

15. The safety system as claimed in any one of the preceding Claims, wherein at least one of the attachments comprises a preferably flat contact surface (33, 51, 72, 75) for a complementary mating surface (43, 73, 79) of the joining part (39, 14, 78).

16. The safety system as claimed in any one of the preceding Claims, wherein the module comprises a mounting element (22) and the at least one of the attachments comprises a recess (30) for the mounting element (22) for mounting of the module (9) to the laser radiation-guiding microscope (1).

17. The safety system as claimed in any one of the preceding Claims which also provides for a joining part (14) for a third attachment (70).

18. The safety system of Claim 3, wherein the joining part comprises the detecting unit having at least one protrusion (44) which actuates the feeler (35, 53, 63, 74) when the joining part (14, 39, 62, 78) is located within the maximum reach of the attachment (25, 45, 58, 70, 14, 86) in the predetermined orientation relative to one of the attachments (25, 45, 58, 70, 14, 81, 86).

19. The safety system of Claim 4, wherein the joining part comprises the detecting unit having at least one electrically conducting protrusion (44), which short-circuits the electrical contacts when the joining part is located within the maximum reach of the respective attachment in the predetermined orientation relative to the respective attachment.

20. The safety system as claimed in any one of the preceding Claims, wherein the joining part comprises the detecting unit having a magnet (84), in particular a ring-shaped magnet.

21. The safety system as claimed in any one of the preceding Claims, wherein the joining part comprises a ring-shaped reception (40) for a cylindrical portion (26) of the module (10).

22. The safety system as claimed in any one of the preceding Claims, wherein the joining part is provided as a seal (23) for a port (16, 17, 18, 19, 20, 21) of the laser radiation-guiding microscope (1).

23. The safety system as claimed in Claim 16, wherein the joining part comprises a mating surface (43, 57, 73, 79) that is complementary to the contact surface of the respective attachment (25, 45, 58, 70, 14).

24. The safety system as claimed in any one of the preceding Claims, which emits as the control signal a signal that switches off the laser (12) or blocks the laser radiation, when the joining part sensor (35, 53, 63, 74, 82) does not sense a joining part (39, 62, 78, 83).

25. The safety system as claimed in any of the preceding Claims, wherein at least one of the attachments (86) comprises a radio transmission unit (87) connected to the joining part sensor and the evaluating unit (85) comprises a corresponding radio reception unit (87) so that the signal link between this attachment (86) and the evaluating unit (87) is radio-based.

## Revendications

1. Système de sécurité prévu pour le rééquipement et destiné à un microscope (1) guidant du rayonnement laser, qui présente des ports sur chacun desquels du rayonnement laser peut sortir du microscope (1) et comprend le au moins un module conçu pour le raccordement à l'un des ports, le système de sécurité présentant les éléments suivants :
- une pièce inverse, qui présente au moins un dispositif de reconnaissance (44, 79, 84) et un dispositif de fixation de pièce inverse (40, 41, 42) pour la fixation sur le module,
- au moins deux parties rapportées (25, 45, 58, 70, 14, 81, 86), qui comprennent chacune un dispositif de fixation de partie rapportée (27, 28, 29 ; 46, 48, 49 ; 59, 60, 61) pour la fixation de la partie rapportée (25, 45, 58, 70, 14, 81, 86) sur l'un des ports et au moins un capteur de pièce inverse (35, 53, 63, 74, 82), dont l'état électrique dépend du fait que la pièce inverse (39, 62, 78, 83) est espacée, dans au moins une orientation prédéfinie par rapport à la partie rapportée (25, 45, 58, 70, 14, 81, 86), d'au moins une distance maximale à la partie rapportée respective (25, 45, 58, 70, 14, 81, 86) et
- un dispositif d'analyse (24, 85) relié aux parties rapportées (25, 45, 58, 70, 14, 81, 86) par une liaison de signal (38, 76), lequel dispositif enregistre l'état électrique des capteurs de pièce inverse (35, 53, 63, 74, 82) et envoie un signal de commande en fonction de l'état enregistré à une commande d'un laser (12) ou à un dispositif pour le blocage du rayonnement du laser (12).

2. Système de sécurité selon la revendication 1, le capteur de pièce inverse présentant sur au moins l'une des parties rapportées un bouton poussoir (35, 53, 63, 74) qui peut être actionné par au moins une partie de la pièce inverse (39, 78).

3. Système de sécurité selon la revendication 2, sur lequel une extrémité libre d'un élément d'actionnement (36, 64) du bouton poussoir (35, 53, 63) est noyée dans la partie rapportée (25, 45, 58, 86).

4. Système de sécurité selon la revendication 1, le capteur de pièce inverse d'au moins l'une des parties rapportées présentant deux contacts électriques, qui peuvent être reliés électriquement l'un à l'autre au moyen d'une zone électroconductrice prédéfinie de la pièce inverse.

5. Système de sécurité selon la revendication 1, sur lequel un capteur sensible au champ magnétique, par exemple un capteur de Hall, est prévu comme capteur de pièce inverse (82) sur au moins l'une des parties rapportées.

6. Système de sécurité selon l'une quelconque des revendications précédentes, sur lequel le capteur de pièce inverse d'au moins l'une des parties rapportées est relié à un dispositif d'émission radio (87), par lequel on peut émettre un signal qui restitue l'état électrique du capteur de pièce inverse.

7. Système de sécurité selon l'une quelconque des revendications précédentes, sur lequel le dispositif de fixation d'au moins l'une des parties rapportées comprend une surface (46) pour la liaison par adhérence de matière avec une surface (47) prédéfinie du microscope (1) ou d'un module pour ce dispositif.

8. Système de sécurité selon l'une quelconques des revendications 1 à 7, sur lequel au moins l'un des dispositifs de fixation de partie rapportée comprend un trou (48) pour une vis (49).

9. Système de sécurité selon la revendication 8, sur lequel au moins l'un des dispositifs de fixation de partie rapportée comprend au moins une vis (29) et/ ou un écrou avec un logement d'outil codé.

10. Système de sécurité selon l'une quelconque des revendications précédentes, sur lequel au moins l'un des dispositifs de fixation de partie rapportée comprend un système de blocage (27, 28, 29) pour la fixation sur le microscope (1) ou sur le module au moyen d'une liaison de blocage.

11. Système de sécurité selon l'une quelconque des revendications précédentes, sur lequel au moins l'un des dispositifs de fixation de partie rapportée comprend un élément formé (59) au moyen duquel une liaison par complémentarité de formes peut être établie entre la partie rapportée respective et le microscope (1) ou le module (69).

12. Système de sécurité selon l'une quelconque des revendications précédentes, au moins l'une des parties rapportées entourant une partie (26) du microscope (1) guidant le rayonnement laser dans l'état fixé sur le microscope (1) guidant le rayonnement laser.

13. Système de sécurité selon la revendication 12, au moins l'une des parties rapportées présentant un segment annulaire (27, 59) et un segment de fermeture (28, 60), lesquels, assemblés et fixés sur leurs extrémités libres les unes aux autres, forment un élément annulaire.

14. Système de sécurité selon la revendication 13, sur lequel le segment de fermeture (60) est articulé sur le segment annulaire (59).

15. Système de sécurité selon l'une quelconque des revendications précédentes, au moins l'une des parties rapportées présentant une surface d'appui (33, 51, 72, 75), de préférence plane, pour une contre-surface (43, 73, 79) complémentaire de la pièce inverse (39, 14, 78).

16. Système de sécurité selon l'une quelconque des revendications précédentes, le module présentant un moyen de fixation (22) et au moins l'une des parties rapportées un évidement (30) pour l'élément de fixation (22) pour la fixation du module (9) sur le microscope (1) guidant le rayonnement laser.

17. Système de sécurité selon l'une quelconque des revendications précédentes, qui est conçu également comme pièce inverse (14) pour une troisième partie rapportée (70).

18. Système de sécurité selon la revendication 3, sur lequel la pièce inverse duquel le dispositif de reconnaissance présente au moins une partie saillante (44), qui actionne le bouton poussoir (35, 53, 63, 74) lorsque la pièce inverse (14, 39, 62, 78) est espacée d'au moins la distance maximale à la partie rapportée (25, 45, 58, 70, 14, 86) dans l'orientation prédéfinie par rapport à l'une des parties rapportées (25, 45, 58, 70, 14, 81, 86).

19. Système de sécurité selon la revendication 4, sur la pièce inverse duquel le dispositif de reconnaissance présente au moins une partie saillante (44) électroconductrice, qui court-circuite les circuits électriques lorsque la pièce inverse est espacée d'au moins la distance maximale à la partie rapportée concernée dans l'orientation prédéfinie par rapport à la partie rapportée.

20. Système de sécurité selon l'une quelconque des revendications précédentes, sur la pièce inverse duquel le dispositif de reconnaissance comprend un aimant (84), en particulier en forme d'anneau.

21. Système de sécurité selon l'une quelconque des revendications précédentes, dont la pièce inverse présente un logement (40) de forme annulaire pour une partie (26) cylindrique du module (10).

22. Système de sécurité selon l'une quelconque des revendications précédentes, dont la pièce inverse est conçue sous forme de fermeture (23) pour un port (16, 17, 18, 19, 20, 21) du microscope guidant le rayonnement laser.

23. Système de sécurité selon la revendication 16, dont la pièce inverse présente une contre-surface (43, 57, 73, 79), qui est complémentaire par rapport à la surface d'appui de la partie rapportée (25, 45, 58, 70, 14) correspondante.

24. Système de sécurité selon l'une quelconque des revendications précédentes, qui émet comme signal de commande un signal qui désactive le laser (12) ou bloque le rayonnement laser lorsque le capteur de pièce inverse (35, 53, 63, 74, 82) n'enregistre pas une pièce inverse (39, 62, 78, 83).

25. Système de sécurité selon l'une quelconque des revendications précédentes, sur lequel au moins l'une des parties rapportées (86) présente un dispositif d'émission radio (87) relié au capteur de pièce inverse et le dispositif d'analyse (85) un dispositif de réception radio (87) correspondant, de sorte que la liaison du signal entre cette partie rapportée (86) et le dispositif d'analyse (87) est soutenue par radio.
